# EUROPÄISCHE PATENTSCHRIFT

(11) **EP 3 347 764 B1**
(45) Veröffentlichungstag und Bekanntmachung des Hinweises auf die Patenterteilung: **06.03.2019**
(21) Anmeldenummer: 16809380.5
(22) Anmeldetag: 09.12.2016
(51) Int. Cl.: G02F 1/13, G02F 1/13357, F21V 8/00

(54) **BILDSCHIRM FUER EINEN FREIEN UND EINEN EINGESCHRAENKTEN SICHTMODUS**
SCREEN FOR A FREE VIEWING MODE AND A RESTRICTED VIEWING MODE
ÉCRAN POUR UN MODE DE VISUALISATION DÉGAGÉE ET MODE DE VISUALISATION RESTREINTE

(30) Priorität: 10.12.2015 DE 102015016134; 29.02.2016 DE 102016002584
(43) Veröffentlichungstag der Anmeldung: 18.07.2018
(73) Patentinhaber: siOPTICA GmbH, 07745 Jena (DE)
(72) Erfinder: KLIPPSTEIN, Markus, 07751 Jena (DE); SCHROETER, Uwe, 07774 Dornburg-Camburg (DE); SCHWARZ, Juergen, 99510 Apolda (DE)
(74) Vertreter: Patentanwälte Geyer, Fehners & Partner mbB
(86) Internationale Anmeldenummer: PCT/EP2016/080422
(87) Internationale Veröffentlichungsnummer: WO 2017/097975

(56) Entgegenhaltungen:
- WO-A1-2015/121398
- DE-A1-102014 003 298
- US-A1- 2010 177 533

## Beschreibung

### Gebiet der Erfindung

In den letzten Jahren wurden große Fortschritte zur Verbreiterung des Sehwinkels bei LCDs erzielt. Allerdings gibt es oft Situationen, in denen dieser sehr große Sehbereich eines Bildschirms von Nachteil sein kann. Zunehmend werden auch Informationen auf mobilen Geräten wie Notebooks und Tablet-PCs verfügbar, wie Bankdaten oder andere, persönliche Angaben, und sensible Daten. Dem entsprechend brauchen die Menschen eine Kontrolle darüber, wer diese sensiblen Daten sehen darf; sie müssen wählen können zwischen einem weiten Betrachtungswinkel, um Informationen auf ihrem Display mit anderen zu teilen, z.B. beim Betrachten von Urlaubsfotos oder auch für Werbezwecke. Andererseits benötigen sie einen kleinen Betrachtungswinkel, wenn sie die Bildinformationen vertraulich behandeln wollen.

### Stand der Technik

Zusatzfolien, die auf Mikro-Lamellen basieren, wurden bereits für mobile Displays eingesetzt, um deren optischen Datenschutz - einen sogenannten Privacy-Modus - zu erreichen. Allerdings waren diese Folien nicht (um)schaltbar, sie mussten immer erst per Hand aufgelegt und danach wieder entfernt werden. Auch muss man sie separat zum Display transportieren, wenn man sie nicht gerade braucht. Ein wesentlicher Nachteil des Einsatzes solcher Lamellen-Folien ist ferner mit den einhergehenden Lichtverlusten verbunden.

Die US 6,765,550 beschreibt einen solchen Sichtschutz durch Mikro-Lamellen. Größter Nachteil ist hier die mechanische Entfernung bzw. der mechanische Anbau des Filters sowie der Lichtverlust im geschützten Modus.

In der US 5,993,940 wird der Einsatz einer Folie beschrieben, die auf ihrer Oberfläche gleichmäßig angeordnete, kleine Prismenstreifen hat, um einen Privacy-Modus zu erzielen. Entwicklung und Herstellung sind recht aufwändig.

In der WO 2012/033583 wird die Umschaltung zwischen freier und eingeschränkter Sicht vermittels der Ansteuerung von Flüssigkristallen zwischen sogenannten "chromonischen" Schichten erzeugt. Hierbei entsteht ein Lichtverlust und der Aufwand ist recht hoch.

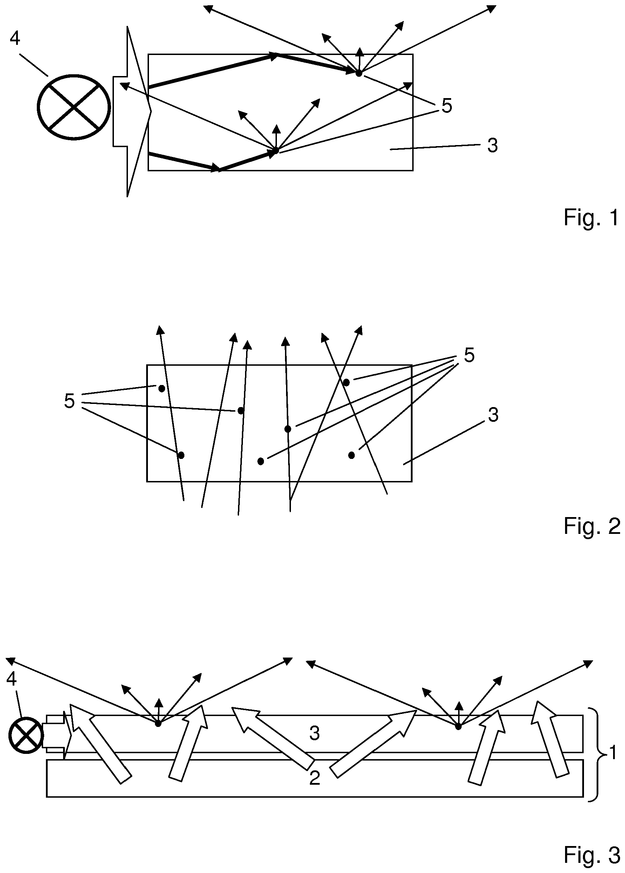

Die Schrift US 2009/0067156 offenbart eine Vielzahl an Ideen, um ein Beleuchtungssystem und ein Bildschirmgerät auszugestalten. Die dort in den Figuren 3A und 3B abgebildete Variante verwendet insbesondere zwei Hintergrundbeleuchtungen, sogenannte Backlights, bestehend aus keilförmigen Lichtleitern, und ein LCD-Panel, wobei das hintere Backlight 40 zwingend einen weiten Beleuchtungswinkel und das vordere Backlight 38 zwingend einen schmalen Beleuchtungswinkel erzeugen soll. Unklar bleibt hierbei jedoch die Funktionsweise, wie das Backlight 38 einen schmalen Beleuchtungswinkel erzeugen soll, ohne dass das Licht mit einem weiten Beleuchtungswinkel, welches vom Backlight 40 herrührt, beim Durchgang durch das Backlight 38 wesentlich in Licht mit einem schmalen Beleuchtungswinkel umgewandelt wird.

Zur Ausgestaltung nach Fig.5 der US 2009/0067156 ist zu bemerken, dass beide Lichtleiter 46 und 48 jeweils "narrow light", also Licht mit einem schmalen Beleuchtungswinkel, produzieren. Das Licht des Lichtleiters 48 wird erst durch einen aufwendig mit Prismenstrukturen zu erstellenden Teilspiegel 50 in "wide light", also Licht mit einem weiten Beleuchtungswinkel, umgewandelt. Diese Umwandlung beschneidet die Lichtintensität extrem, da das zunächst in einen schmalen Beleuchtungswinkel abgestrahlte Licht, welches als einziges Licht zur Verfügung steht, dann in einen großen Beleuchtungswinkel, i.d.R. den Halbraum, aufgefächert wird. Dies hat zur Folge, dass je nach Parametern die Helligkeit - bezogen auf die Leuchtdichte - um einen Faktor 5 oder mehr verringert wird. Es handelt sich also um eine praktisch wenig relevante Ausgestaltung.

In der Ausgestaltung nach Fig.7 der US 2009/0067156 ist zwingend eine Phosphorschicht notwendig, diese soll UV-Licht in sichtbares Licht umwandeln. Dieser Aufwand ist groß und bei dem Wunsch nach hinreichend Licht aus dem Backlight, um ein LCD-Panel lesbar zu beleuchten, werden sehr große Intensitäten an UV-Licht benötigt. Mithin ist dies teuer, aufwändig und schon von der Abschirmung der benötigten UV-Strahlung her nicht praktikabel.

Die US 2012/0235891 beschreibt ein sehr aufwändiges Backlight in einem Bildschirm. Dort kommen gemäß Fig.1 und 15 nicht nur mehrere Lichtleiter zum Einsatz, sondern auch weitere komplexe optische Elemente wie etwa Mikrolinsenelemente 40 und Prismenstrukturen 50, die das Licht von der hinteren Beleuchtung auf dem Weg zur vorderen Beleuchtung umformen.

Dies ist teuer und aufwändig umzusetzen und ebenso mit Lichtverlust verbunden. Gemäß der Variante nach Fig.17 in der US 2012/0235891 produzieren beide Lichtquellen 4R und 18 Licht mit einem schmalen Beleuchtungswinkel, wobei das Licht von der hinteren Lichtquelle 18 erst aufwändig in Licht mit einem großen Beleuchtungswinkel, umgewandelt wird. Diese komplexe Umwandlung ist - wie weiter oben schon bemerkt - stark helligkeitsmindernd.

Gemäß der JP 2007-155783 werden spezielle, aufwendig zu berechnende und herzustellende optische Oberflächen 19 genutzt, die dann Licht je nach Lichteinfallswinkel in verschiedene schmale oder breite Bereiche ablenken. Diese Strukturen ähneln Fresnel-Linsen. Ferner sind Störflanken vorhanden, die Licht in unerwünschte Richtungen ablenken. Somit bleibt unklar, ob wirklich sinnvolle Lichtverteilungen erreicht werden können.

Nach Lehre der GB 2428128 A werden zur Erzielung einer eingeschränkten Sicht zusätzliche, vom Bildschirm deutlich entfernte Lichtquellen, die ein auf dem Bildschirm angebrachtes Hologramm beleuchten, verwendet, um den Seiteneinblick mit speziellen Wellenlängen zu überlagern. Nachteilig sind hierbei der benötigte Abstand der Lichtquellen vom Bildschirm und der Aufwand, entsprechende Hologramme herzustellen.

In der US 2013/0308185 wird ein spezieller, mit Stufen ausgebildeter Lichtleiter beschrieben, der Licht auf einer Großfläche in verschiedene Richtungen abstrahlt, je nachdem, aus welcher Richtung er von einer Schmalseite aus beleuchtet wird. Im Zusammenspiel mit einem transmissiven Bildgeber, z.B. einem LC-Display, kann somit ein zwischen freiem und eingeschränktem Sichtmodus schaltbarer Bildschirm erzeugt werden. Nachteilig ist hierbei u.a., dass der eingeschränkte Sichteffekt entweder nur für links/rechts oder aber für oben/unten, nicht aber für links/rechts/oben/unten gleichzeitig erzeugt werden kann, wie es etwa für bestimmte Zahlungsvorgänge nötig ist. Hinzu kommt, dass auch im eingeschränkten Sichtmodus aus blockierten Einsichtwinkeln immer noch ein Restlicht sichtbar ist.

Schließlich beschreibt die DE 10 2014 003 298 A1 Verfahren und Anordnung zur wahlweisen Einschränkung der Erkennbarkeit von Bildern. Hierzu ist ein spezielles optisches Element nötig ist, welches für das von dem Bildschirm ausgehende Licht zu mindestens 70% transparent ist, und welches für aus Leuchtmitteln seitlich einfallendes Licht in einen eingeschränkten Winkelbereich derart ablenkt, dass in Richtungen, die in Winkeln α größer als γ, mit γ > 20°, zur Flächennormale des Bildschirms gelegen sind, das von dem Bildschirm ausgehende Licht mit dem von dem optischen Element umgelenkten Licht überlagert wird, wodurch im Wesentlichen das auf dem Bildschirm dargestellte Bild nur aus Winkeln β < γ zur Flächennormale des Bildschirms uneingeschränkt sichtbar ist.

DE 10 2014 003 298 A1 schlägt als spezielles optisches Element hierzu einen seitlich beleuchtbaren Lichtleiter vor, der holografisch-optische Elemente oder richtungsabhängig teilverspielte Flächen aufweist, die dafür sorgen, dass Licht hauptsächlich in Winkelbereiche abgestrahlt wird, die mindestens 20° jenseits der Flächennormalen des Lichtleiters liegen. Dieser Lichtleiter wird als Sichtschutzschirm vor einer Anzeige benutzt, der verhindert, dass ein angezeigtes Bild unter großen Betrachtungswinkeln noch erkennbar ist, da es dort von dem hauptsächlich seitlich emittierten Licht des Lichtleiters überlagert wird.

WO 2015/121398 A1 offenbart einen Bildschirm, der in mindestens zwei Betriebsarten B1 für einen freien Sichtmodus und B2 für einen eingeschränkten Sichtmodus betrieben werden kann, umfassend eine flächenartig ausgedehnte Hintergrundbeleuchtung, die in der Betriebsart B1 für einen freien Sichtmodus Licht in einen nicht eingeschränkten Winkelbereich abstrahlt, und die in der Betriebsart B2 für einen eingeschränkten Sichtmodus Licht in einen eingeschränkten Winkelbereich abstrahlt, sowie einen in Betrachtungsrichtung vor der Hintergrundbeleuchtung angeordneten transmissiven Bildgeber.

US 2010/177533 A1 beschreibt einen Sichtschutzschirm, der im Wesentlichen aus einer Lichtleitplatte besteht, die seitlich von Leuchtdioden beleuchtet werden kann, und die an mindestens einer ihrer Hauptflächen Lichtauskoppelelemente aufweist. Die Lichtauskoppelelemente können zum Beispiel aus aufgedruckten Punkten lichtstreuenden Materials bestehen, beispielsweise aus TiO₂, oder aus eingeprägten Facetten auf einer der Hauptflächen. Im Privatmodus werden die Leuchtdioden eingeschaltet, das Licht wird an den Lichtauskoppelelementen gestreut und überblendet, damit das Bild eines hinter dem Sichtschutzschirm befindlichen Gegenstands. Im freien Sichtmodus bleiben die Leuchtdioden ausgeschaltet, der Sichtschutzschirm ist durchsichtig, so dass das Bild eines hinter dem Sichtschutzschirm befindlichen Gegenstands zu sehen ist.

Den vorgenannten Verfahren und Anordnungen ist in der Regel der Nachteil gemein, dass sie die Helligkeit des Grundbildschirms deutlich reduzieren und/oder ein aktives, zumindest jedoch ein spezielles, optisches Element zur Modi-Umschaltung benötigen und/oder eine aufwendige sowie teure Herstellung erfordern und/oder die Auflösung im frei betrachtbaren Modus reduzieren.

### Beschreibung der Erfindung

Es ist daher Aufgabe der Erfindung, einen Bildschirm und ein Verfahren zu beschreiben, durch die eine sichere Darstellung von Informationen durch einen wahlweise eingeschränkten Betrachtungswinkel realisiert werden können, wobei in einer zweiten Betriebsart eine freie, möglichst im Betrachtungswinkel uneingeschränkte Sicht möglich sein soll. Die Erfindung soll mit einfachen Mitteln möglichst preisgünstig umsetzbar sein. In beiden Betriebsarten soll eine möglichst hohe Auflösung, besonders bevorzugt die native Auflösung des verwendeten Bildschirms, sichtbar sein. Ferner soll nur ein möglichst geringer oder kein Lichtverlust durch die Lösung eingeführt werden. Die Lösung soll weiterhin bevorzugt vorn auf dem Bildschirm platzierbar sein, damit sie für möglichst viele Arten von Bildschirmen, wie etwa LCD und OLED, verwendbar ist.

Diese Aufgabe wird gelöst von einem Bildschirm, der in mindestens zwei Betriebsarten B1 für einen freien Sichtmodus und B2 für einen eingeschränkten Sichtmodus betrieben werden kann. Ein solcher Bildschirm umfasst eine Bildwiedergabeeinheit, einen oder mehrere in Betrachtungsrichtung vor der Bildwiedergabeeinheit gelegene, plattenförmige und transparente Lichtleiter sowie Leuchtmittel, die in der Regel seitlich an mindestens einer der Schmalseiten des Lichtleiters angeordnet sind. Die Bildwiedergabeeinheit ist in Betrachtungsrichtung hinter dem Lichtleiter angeordnet. Der Lichtleiter weist einen durchschnittlichen Haze-Wert kleiner als 20% gemessen ASTM D1003 auf, in bevorzugten Ausgestaltungen kleiner als 10% und in besonders bevorzugten Ausgestaltungen kleiner als 5% bzw. 4%.

In der Betriebsart B1 sind die Leuchtmittel ausgeschaltet, so dass das von der Bildwiedergabeeinheit ausgehende Licht, auf welches Bildinformationen aufmoduliert sind, im Wesentlichen unbeeinflusst durch den Lichtleiter hindurchtritt. In der Betriebsart B2 sind die Leuchtmittel eingeschaltet. Dabei wird in einer ersten Alternative entweder aufgrund von im Lichtleiter räumlich und/oder von der Konzentration her verteilten Streupartikeln oder aufgrund von auf mindestens einer der Großflächen angeordneten oder ausgebildeten Auskoppelelementen auf mindestens einer der Großflächen des Lichtleiters eine Licht-Abstrahlcharakteristik erzeugt, bei der die durchschnittliche Leuchtdichte gemessen in Winkeln α zur Flächennormale der mindestens einen Großfläche des Lichtleiters mit 0° ≤ α ≤ θ, mit 10° ≤ θ ≤ 60° um mindestens einen Faktor X, mit X ≥ 1,2, kleiner ist als die höchste messbare Leuchtdichte derselben Großfläche F1 des Lichtleiters, die in Winkeln α > θzur Flächennormale abgestrahlt wird. In anderen Ausgestaltungen kann der Faktor X ≥ 2,5 sein und/oder der Winkel θ 10°, 30°, 30°, 45° oder einen anderen sinnvollen Wert betragen.

In einer zweiten Alternative, die auch mit der ersten Alternative kombiniert werden kann, weist die Bildwiedergabeeinheit eine Licht-Abstrahlcharakteristik auf, bei welcher in Richtung der Flächennormalen der Bildwiedergabeeinheit eine höhere Leuchtdichte erzielt wird als in einem Winkel von α ≥ θ gegenüber der Flächennormalen. Eine entsprechende Bildwiedergabeeinheit lässt sich beispielsweise generieren, wenn in einem LCD zur Lichtkonzentration zwischen dem LCD-Panel und dem Backlight mit gekreuzten OLF (Optical Lighting Film) und/oder gekreuzten BEF (Brightness Enhancement Film) gearbeitet wird.

Im Ergebnis wird in der Betriebsart B2 das von der Bildwiedergabeeinheit ausgehende Licht, auf welches Bildinformationen aufmoduliert sind, von Licht überlagert, welches der Lichtleiter flächig über einen großen Winkelbereich abstrahlt, wodurch die Sichtbarkeit der auf der Bildwiedergabeeinheit dargestellten Bildinformationen aus Betrachtungswinkeln α > θ verringert oder sogar verhindert wird

Die Größe X kann hier und in den folgenden Ausgestaltungen der Erfindung auch anders gewählt werden, etwa X ≥ 4, 5, 6, 10, 20, 50, 100 oder noch größer. Sie ist ein Maß dafür, wieviel stärker der Lichtleiter in "seitliche" Einblickwinkel Licht verglichen mit dem in Flächennormalenrichtung abgestrahlten Licht abstrahlt. Insbesondere ist auch der Winkel θ in Abhängigkeit von der Lichtmenge vorgebbar, d.h. der Winkel θ ist durch die eingestrahlte Lichtmenge beeinflussbar: Je größer die Lichtmenge ist, desto mehr Licht wird in Richtung der Flächennormalen abgestrahlt.

In einer vorteilhaften Ausgestaltung des erfindungsgemäßen Bildschirms erzeugen die in der Betriebsart B2 eingeschalteten Leuchtmittel an mindestens einer der Schmalseiten des Lichtleiters auf mindestens einer der Großflächen F1 des Lichtleiters eine Licht-Abstrahlcharakteristik, die im Winkelbereich 0° ≤ α ≤ 30° eine durchschnittliche Leuchtdichte aufweist, welche um einen Faktor X mit X ≥ 2,5 (oder auch größer als 4, 5 etc.) kleiner ist als die höchste messbare (einzelne) Leuchtdichte im Winkelbereich 30° ≤ α ≤ 90° zur Flächennormalen.

Im Idealfall würde auf mindestens einer der Großflächen F1 des Lichtleiters eine Licht-Abstrahlcharakteristik vorherrschen, bei der im Winkelbereich 0° ≤ α ≤ 30° zur Flächennormalen nahezu kein Licht ausgekoppelt wird, und bei der im Winkelbereich 30° ≤ α ≤ 90° zur Flächennormalen Licht mit einer Leuchtdichte, die möglichst annähernd so hoch oder sogar höher als die Leuchtdichte des Bildschirms in dieser Richtung ist, abgestrahlt wird. Dieser Idealfall ist praktisch jedoch kaum realisierbar.

Der Winkel α kann hier gemessen werden entlang der Horizontalen, der Vertikalen und/oder einer anderen Richtung des Bildschirms, aber stets zur Flächennormalen. Wenn beispielsweise die vorgegebenen Bedingungen für eine horizontale und vertikale Winkelmessung gelten, kann der Bildschirm in der Betriebsart B2 aus schrägen Winkeln nicht von links, rechts, oben und unten eingesehen werden. Wenn jedoch die vorgegebenen Bedingungen nur für eine horizontale Winkelmessung gelten, kann der Bildschirm in der Betriebsart B2 lediglich aus schrägen Winkeln nicht von links und rechts eingesehen werden. Von oben und unten jedoch ist die Betrachtung dann in der Regel möglich.

In einer vorteilhaften Ausgestaltung der Erfindung sind - sofern gemäß der ersten Alternative Streupartikel vorhanden sind - diese Streupartikel im Lichtleiter in der Form von Mikrolamellen eingearbeitet, wobei die Mikrolamellen wiederum in ein transparentes, nicht-streuendes Material eingebettet sind. Die Mikrolamellen können dabei typischerweise zwischen 30 µm und 150 µm dick sowie zwischen 30 µm und 300 µm hoch sein. Der durchschnittliche Mittenabstand von Mikrolamelle zu Mikrolamelle kann regelhaft zwischen 40 µm und 150 µm sein. Andere Werte sind möglich. Wichtig ist, dass das Tastverhältnis von Höhe zu Mittenabstand groß genug ist, um bei Schrägsicht auf die Mikrolamellen genügend Licht auszukoppeln.

Ferner können die die Mikrolamellen parallel und/oder unter einem Winkel gekreuzt ausgebildet sein. Wenn sie parallel ausgebildet sind, führt die Lichtauskopplung aus ihnen dazu, dass die Lichtüberlagerung mit den dargestellten Bildinformationen nur in einer Dimension die Sichtbarkeit vermindert, z.B. links-rechts oder oben-unten. Sind die Mikrolamellen hingegen gekreuzt ausgebildet, z.B. rechteckig gekreuzt, führt die Lichtauskopplung aus ihnen dazu, dass die Lichtüberlagerung mit den dargestellten Bildinformationen in zwei Dimension die Sichtbarkeit vermindert, also gleichzeitig links-rechts und oben-unten.

Bei einer möglichen Umsetzung hierzu bestehen die Mikrolamellen aus einem mit Streupartikeln versetzten Silikongummi. Die Streupartikel können in diesem Falle beispielsweise ausgebildet sein als Titandioxid, Bariumsulfat, silsesquioxane Partikeln, und/oder vernetzte Polystyrol-Partikel, wobei die Mikrolamellen selbst wiederum in transparentem Silikongummi eingebettet sind.
Dadurch kann eine Abstrahlcharakteristik des Lichtleiters erzielt werden, bei der in kleinen Winkeln zur Flächennormalen des Lichtleiters deutlich weniger Licht ausgekoppelt wird, als in großen Winkeln (z.B. größer als 30 oder 45 Grad) hierzu, was ja gewünscht ist.

Wesentlich für die Erfindung ist insgesamt eine höhere (relative) Helligkeit des aus dem Lichtleiter herrührenden Lichts gegenüber dem aus der Bildwiedergabeeinheit herrührenden Lichtes in Winkeln, die für die Sicht blockiert werden sollen, während bei nicht-blockierten Winkeln die Verhältnisse genau umgekehrt liegen sollen, d.h. aus solchen Blickrichtungen soll das Licht der Bildwiedergabeeinheit stärker sein, als das überlagernde Licht aus dem Lichtleiter.

Insbesondere für diese Variante des erfindungsgemäßen Bildschirms gilt, dass der Lichtleiter aus einem transparenten, thermoplastischen oder thermoelastischen Kunststoff und darin im Wesentlichen homogen verteilten Streupartikeln bestehen kann, wobei die Streupartikel beispielsweise bestehen aus Titandioxid, Bariumsulfat, silsesquioxanen Partikeln oder vernetzten Polystyrol-Partikeln. Andere Arten von Streupartikeln sind möglich.

Bevorzugt werden als Streupartikel im transparenten Lichtleiter Titandioxid-Partikel einer mittleren Partikelgröße von 150 - 500 nm in einer Konzentration bezogen auf das Gewicht des jeweiligen Lichtleiters von 0.01 - 300 Gew.-ppm eingesetzt. Besonders bevorzugt wird für den oder die Lichtleiter eine Konzentration an Streumitteln von Titandioxid-Partikel von 0.1 - 50 Gew.-ppm, bevorzugt 0.1 - 10 Gew.-ppm eingesetzt. Dabei haben die Titandioxidpartikel eine mittlere Partikelgröße von 160 bis 450 nm, besonders bevorzugt jedoch von 170 bis 400 nm. Der Haze-Wert solcher Lichtleiter, gemessen nach ASTM D1003, liegt im Bereich von 0, 2 bis 2%.

Es ist allerdings auch möglich, als Streupartikel Bariumsulfat in ca. 3 µm Partikelgröße, vernetzte Polystyrol-Partikel in ca. 4 µm Partikelgröße oder silsesquioxane Partikel mit ca. 2 µm Partikelgröße in geeigneten Konzentrationen einzusetzen. Außerdem kann der Lichtleiter 3 mindestens 40 Gew.%, bevorzugt mindestens 60 Gew. %, Polymethylmethacrylat bezogen auf sein Gewicht, beinhalten.

Dadurch kann eine Abstrahlcharakteristik des Lichtleiters erzielt werden, bei der in kleinen Winkeln zur Flächennormalen des Lichtleiters deutlich weniger Licht ausgekoppelt wird, als in großen Winkeln (z.B. größer als 30 oder 45 Grad) hierzu, was ja gewünscht und im Rahmen der Erfindung erforderlich ist.

Allgemein ist es auch möglich, dass der transparente Lichtleiter aus einem Matrixkunststoff A und darin verteilten Streupartikeln aus einem Polymerisat B besteht, wobei der Anteil der Streupartikel bestehend aus dem Polymerisat B jeweils 0,00001 bis 5 Gewichtsprozent bezogen auf den Matrixkunststoff A beträgt, und die Brechzahl nD(B) des Polymerisats B um mindestens 0,002 Einheiten über der Brechzahl nD(A) des Matrixkunststoffs A liegt.

Die Streupartikel sind, im Falle der Nichtnutzung der Lamellenform für die Streupartikel, im Lichtleiter homogen verteilt, wodurch der Lichtleiter keine inhomogene optische Struktur aufweist.

Ferner weist der plattenförmige Lichtleiter mindestens zwei einander gegenüberliegende Großflächen auf, die parallel oder geneigt zueinander angeordnet sind. Eine keilförmige Struktur ist auch möglich, wenngleich parallele Großflächen von Vorteil sind. Sinnvolle Dicken des Lichtleiters liegen typischerweise zwischen einschließlich 0,5 mm und einschließlich 4 mm. Andere Dicken können fallbedingt auch sinnvoll sein.

Für alle Ausgestaltungen gilt, dass die Bildwiedergabeeinheit zum Beispiel ein LCD, OLED, Plasma-Display, FED-Bildschirm, SED-Bildschirm, VFC-Bildschirm oder eine andere Art von Bildschirm sein kann. Die Bildwiedergabeeinheit - auch als Bildgeber bezeichnet - kann aber auch statischer Natur sein, etwa eine von hinten beleuchtete Folie oder sogar ein gedrucktes Bild. Weitere Varianten sind möglich.

Weiterhin kann es Vorteile bringen, wenn auf der Oberseite der Bildwiedergabeeinheit und/oder auf mindestens einer der Großflächen des Lichtleiters Mittel zur Reflexminderung, etwa eine Antiglare- und/oder ein Antireflexbeschichtung, angeordnet sind. Insbesondere eine Antiglarebeschichtung dient im Zusammenhang mit der Erfindung nicht allein der Verminderung von direkten Reflexen externer Lichtspots, sondern erlaubt vielmehr auch die gestreute Rückreflexion des zur Bildwiedergabeeinheit hin vom Lichtleiter vor der Bildwiedergabeeinheit abgestrahlten Lichtes.

In allen Ausgestaltungen der Erfindung können die besagten Leuchtmittel LEDs bzw. LED-Zeilen oder Laserdioden sein. Andere Varianten sind denkbar und liegen im Rahmen der Erfindung.

Eine spezielle Ausgestaltung der zweiten Alternative lässt sich erzielen, wenn der Lichtleiter aus zwei Schichten besteht, die wiederum selbst Lichtleiter sind, welche durch einen Extrusionsvorgang hergestellt worden sind. Dabei liegen die Schichten derart mit ihren Großflächen möglichst eng aneinander an, dass ihre Extrusionsrichtungen gekreuzt sind. Hintergrund ist, dass die Extrusionsrichtung einen starken Einfluss auf die Lichtabstrahlcharakteristik der Lichtleiter hat. Werden diese gekreuzt, so kann vor dem Bildgeber eine Lichtauskopplung zur Überlagerung vom Bildgeber herrührenden Lichts sowohl nach links-rechts, als auch nach oben-unten erzielt werden.

In einer bevorzugten Ausgestaltung der ersten Alternative umfasst der Bildschirm weitere Lichtleiter. Insbesondere vorteilhaft ist vor dem Lichtleiter in Betrachtungsrichtung ein weiterer Lichtleiter angeordnet. An jeweils einer der Großflächen des Lichtleiters (3) und des weiteren Lichtleiters sind Auskoppelelemente angeordnet oder ausgebildet, wobei Leuchtmittel (4) an einer Schmalseite des Lichtleiters (3) und an der dieser Schmalseite gegenüberliegenden Schmalseite des weiteren Lichtleiters angeordnet sind, und wobei durch die Auskoppelelemente eine asymmetrische Licht-Abstrahlcharakteristik derart vorgegeben ist, dass das Licht in den in Einstrahlrichtung liegenden Viertelraum abgestrahlt wird.

Als Auskoppelelemente lassen sich generell beispielsweise holographische Strukturen oder sonstige Mikrostrukturen verwenden, die auch in die Oberfläche des Lichtleiters eingeätzt werden können. Die asymmetrische Licht-Abstrahlcharakteristik äußert sich beispielsweise darin, dass bei von einer linken Schmalseite in den Lichtleiter eingestrahltes Licht in den Viertelraum, der von der Flächennormalen der jeweiligen Großfläche des Lichtleiters und der Einstrahlrichtung - also von dem Leuchtmittel weg - gebildet wird, abgestrahlt wird, jedoch nicht in rückwärtiger Richtung. Der Abstrahlbereich kann beispielsweise im Bereich von 20° bis 50° zur Flächennormalen liegen.

In einer weiteren, bevorzugten Ausgestaltung sind die Leuchtmittel zur Abstrahlung farbigen Lichts ausgebildet. Unter farbigem Licht wird insbesondere sichtbares Licht verstanden, welches nicht weiß ist, also z.B. Licht in den Farben Rot, Grün, Blau, Türkis, Gelb, Cyan oder Magenta. Ferner kann dieses Licht wahlweise in verschiedenen Helligkeitsstufen abgestrahlt werden.

Außerdem ist es möglich, dass die Farbigkeit des von den Leuchtmitteln ausgehenden Lichtes auch zeitlich moduliert wird, etwa in Farbe und/oder Helligkeit. Darüber hinaus können die Leuchtmittel auch mit verschiedenen einzelnen Leuchtmitteln bzw. Leuchtelementen umgesetzt werden, etwa RGB-LEDs in LED-Zeilen, die gleichzeitig oder zeitlich versetzt und/oder räumlich versetzt jeweils Licht unterschiedlicher Farben und/oder unterschiedlicher Helligkeit abstrahlen.

In der Betriebsart B2 ist das aus schrägen, durch die Winkeleinschränkung geblockten Sichtrichtungen, wahrnehmbare Bild je nach Ausgestaltung der Leuchtmittel dann eine entsprechend gefärbte Fläche, in der Regel jedoch gerade nicht eine schwarze oder weiße Fläche, da das farbige Licht, welches der Lichtleiter aussendet, aus schräger Betrachtungsrichtung selbst einen hellen Bildinhalt sichtbar überstrahlt. Ohne die Verwendung von farbigen Leuchtmitteln ist das wahrnehmbare Bild je nach Ausgestaltung der Leuchtmittel und des Lichtleiters eine graue oder weiße Fläche, in der Regel jedoch nicht eine schwarze Fläche, da ja das Licht, welches der Lichtleiter aussendet, selbst einen schwarzen Bildinhalt sichtbar überstrahlt.

Die Leuchtmittel können Licht in einer Farbe abstrahlen, welche im vom transmissiven Bildgeber dargestellten Bild nicht vorkommt. Alternativ können die Leuchtmittel Licht in einer Farbe abstrahlen, welche im von der transmissiven Bildwiedergabeeinheit dargestellten Bild vorkommt bzw. im Farbspektrum nahe an einer solchen Farbe liegt. Außerdem können die Leuchtmittel Licht in einer Farbe abstrahlen, die in etwa der Komplementärfarbe einer Farbe, welche im von der Bildwiedergabeeinheit dargestellten Bild vorkommt, entspricht.

Besonders vorteilhaft findet der erfindungsgemäße Bildschirm Verwendung zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

Für alle Ausgestaltungen gilt, dass jeder vorhandene Lichtleiter mindestens eine Lichteintrittsfläche und mindestens eine Lichtaustrittsfläche aufweist, wobei das Verhältnis von Lichtaustrittsfläche zu Lichteintrittsfläche mindestens 4 beträgt.

Grundsätzlich bleibt die Leistungsfähigkeit der Erfindung erhalten, wenn die vorbeschriebenen Parameter in bestimmten Grenzen variiert werden.

Weiterhin können die gewünschten eingeschränkten Winkelbereiche für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel oder ggf. gar keine Einschränkung sinnvoll sein, als in der horizontalen Richtung, etwa wenn bei Geldautomaten Personen mit unterschiedlicher Größe etwas sehen sollen, während der Seiteneinblick stark eingeschränkt bleiben soll. Für POS-Zahlterminals sind hingegen auf Grund von Sicherheitsbestimmungen oftmals Sichteinschränkungen in der Betriebsart B2 sowohl in horizontaler als in vertikaler Richtung notwendig.

Besonders gut funktioniert die Erfindung dann, wenn in der sichteingeschränkten Betriebsart B2, d.h. wenn die Leuchtmittel eingeschaltet sind, das auf dem Bildschirm dargestellte Bild zu einem gewissen Grad gedimmt wird. Dadurch wird der Überlagerungseffekt des vom Bild herrührenden Lichtes, weil dies nun eine geringere Lichtstärke aufweist, mit dem durch den Lichtleiter abgestrahlten Licht verstärkt, so dass der Sichteinschränkungseffekt verbessert wird. Zur weiteren Verbesserung der Sichteinschränkung kann in diesem Falle auch z.B. auf dem Bildschirm als Bild dargestellter Text statt schwarz-weiß in schwarz-grau wiedergegeben werden. Die Aufgabe wird auch gelöst von einem Bildschirm, der in mindestens zwei Betriebsarten B1 für einen freien Sichtmodus und B2 für einen eingeschränkten Sichtmodus betrieben werden kann, eine Bildwiedergabeeinheit, mindestens einen in Betrachtungsrichtung vor der Bildwiedergabeeinheit gelegenen, plattenförmigen und transparenten Lichtleiter sowie Leuchtmittel, die seitlich an Schmalseiten des Lichtleiters angeordnet sind, wobei der Lichtleiter aus Kunststoff besteht und im Lichtleiter Streupartikel in Form von parallel oder gekreuzt verlaufenden, länglichen Lamellen verteilt sind, wobei jedoch außerhalb der Lamellen keine Streupartikel im Lichtleiter eingebracht sind, und/oder an mindestens einer der Großflächen des Lichtleiters Auskoppelelemente, die wie oben bereits beschrieben ausgestaltet sein können, ausgebildet oder aufgebracht sind.

Dadurch tritt in der Betriebsart B1, bei der die Leuchtmittel ausgeschaltet sind, das von der Bildwiedergabeeinheit herrührende Licht im Wesentlichen unbeeinflusst durch den Lichtleiter hindurch, und in der Betriebsart B2, bei der die Leuchtmittel eingeschaltet sind, wird das von der Bildwiedergabeeinheit herrührende Licht von Licht überlagert, welches der Lichtleiter dann nahezu ausschließlich aus den in Form von Lamellen angeordneten Streupartikeln abstrahlt, wodurch die Sichtbarkeit eines auf der Bildwiedergabeeinheit dargestellten Bildes bei Schrägsicht auf die Bildwiedergabeeinheit eingeschränkt wird.

In der Betriebsart B2 ist das aus schrägen Sichtrichtungen wahrnehmbare Bild je nach Ausgestaltung der Leuchtmittel und der Streupartikel eine graue oder weiße Fläche, in der Regel jedoch nicht eine schwarze Fläche, da das Licht, welches der Lichtleiter aus den in Lamellenform angeordneten Streupartikeln aussendet, selbst einen schwarzen Bildinhalt sichtbar überstrahlt. Allerdings ist es ebenfalls möglich, farbige Leuchtmittel einzusetzen, die Licht in einer oder mehreren vorgegebenen Farben abstrahlend ausgebildet sind.

Als Kunststoff kommt beispielsweise Plexiglas oder Silikongummi in Frage.

Die besagte Lamellenform kann beispielsweise 50 µm bis 400 µm hoch sowie etwa 10 µm bis 40 µm breit sein. Die Abstände zwischen solchen Lamellen können beispielsweise 40 µm bis 200 µm betragen. Über diese Parameter wird auch die Wirkung der Streupartikel, welche in Lamellenform angeordnet sind, festgelegt, und zwar insbesondere auch der bzw. die Sichtwinkel, unter welchen man noch den auf der Bildwiedergabeeinheit dargestellten Bildinhalt problemlos erkennen kann bzw. am welchen Grenzwinkeln der Schrägsicht in x- und/oder y-Richtung die Überstrahlung durch Licht aus den Streupartikeln im Lichtleiter so stark wird, dass die Sichtbarkeit eines auf der Bildwiedergabeeinheit dargestellten Bildes deutlich herabgesetzt wird.

Der Lichtleiter weist in der Regel einen Haze-Wert von weniger als 10%, bevorzugt von weniger als 4% auf, gemessen gemäß ASTM D1003. Ferner kommen als Streupartikel insbesondere Titandioxidpartikel in Frage. Andere Ausgestaltungen sind jedoch möglich, etwa mit Partikeln aus Bariumsulfat, mit silsesquioxanen Partiken oder mit vernetzten Polystyrol-Partikeln oder noch anderen Arten von Partikeln. Die Streupartikel sind innerhalb der Lamellenformen in der Regel im Wesentlichen homogen verteilt.

Vorteilhaft werden als Streupartikel in den transparenten Lichtleitern Titandioxid-Partikel einer mittleren Partikelgröße von 150 - 500 nm in einer Konzentration bezogen auf das Gewicht des jeweiligen Lichtleiters von 0.01 - 300 Gew.-ppm eingesetzt. Besonders bevorzugt wird für den oder die Lichtleiter eine Konzentration an Streumitteln von Titandioxid-Partikel von 0.1 - 50 Gew.-ppm, bevorzugt 0.1 - 10 Gew.-ppm eingesetzt. Dabei haben die Titandioxidpartikel eine mittlere Partikelgröße von 160 nm bis 450 nm, besonders bevorzugt jedoch von 170 nm bis 400 nm. Der Haze-Wert der Lichtleiter, gemessen nach ASTM D1003, liegt im Bereich von 0, 2 bis 2%.

Weiterhin können die Lichtleiter mindestens 40 Gew.%, bevorzugt mindestens 60 Gew. %, Polymethylmethacrylat bezogen auf ihr Gewicht, beinhalten.

Es ist möglich, dass die transparenten Lichtleiter jeweils aus einem Matrixkunststoff A und darin wie oben beschrieben in Lamellenform verteilten Streupartikeln aus einem Polymerisat B bestehen, wobei der Anteil der Streupartikel bestehend aus Polymerisat B jeweils 0,01 bis 3 Gewichtsprozent bezogen auf den Matrixkunststoff A beträgt, und die Brechzahl nD(B) des Polymerisats B um mindestens 0,002 Einheiten über der Brechzahl nD(A) des Matrixkunststoffs A liegt.

Sinnvolle Dicken des Lichtleiters liegen typischerweise zwischen einschließlich 0,15 mm und einschließlich 4 mm. Andere Dicken können fallbedingt auch sinnvoll sein.

Ferner enthält der Lichtleiter mindestens zwei einander gegenüberliegende Großflächen, die parallel oder geneigt zueinander angeordnet sind. Eine keilförmige Struktur ist auch möglich, wenngleich parallele Großflächen von Vorteil sind. Für alle Ausgestaltungen gilt, dass jeder vorhandene Lichtleiter mindestens eine Lichteintrittsfläche und mindestens eine Lichtaustrittsfläche aufweist, wobei das Verhältnis von Lichtaustrittsfläche zu Lichteintrittsfläche mindestens 4 beträgt. Grundsätzlich bleibt die Leistungsfähigkeit der Erfindung erhalten, wenn die vorbeschriebenen Parameter in bestimmten Grenzen variiert werden.

Weiterhin ist es ggf. vorteilhaft, wenn auf der Oberseite der Bildwiedergabeeinheit und/oder auf mindestens einer der Großflächen des Lichtleiters vor der Bildwiedergabeeinheit Mittel zur Reflexminderung, etwa eine Antiglare- und/oder ein Antireflexbeschichtung, angeordnet sind. Insbesondere eine Antiglarebeschichtung dient im Zusammenhang mit dem erfindungsgemäßen Bildschirm nicht allein der Verminderung von direkten Reflexen externer Lichtspots, sondern erlaubt vielmehr auch die gestreute Rückreflexion des vom Lichtleiter vor der Bildwiedergabeeinheit zur Bildwiedergabeeinheit hin abgestrahlten Lichtes.

In allen vorgenannten Ausgestaltungen können die besagten Leuchtmittel LEDs bzw. LED-Zeilen oder Laserdioden sein. Andere Varianten sind denkbar und liegen im Rahmen der Erfindung.

Eine besondere Ausgestaltung dieser alternativen Lösung wird dadurch erreicht, dass als Streupartikel in Lamellenform im Lichtleiter fluoreszierende Partikel eingesetzt werden, die bei Beleuchtung mit UV-Licht sichtbares Licht abstrahlen, und dass als Leuchtmittel LEDs eingesetzt werden, die UV-Licht abstrahlen. Somit wird für die Betriebsart B2 erreicht, dass die Partikel dann auf Grund der durch das UV-Licht angeregten Fluoreszenzwirkung entsprechend sichtbares Licht emittieren.

Als Bildwiedergabeeinheit kommen z.B. LCD-Bildschirme, OLED-Bildschirme oder jedwede andere Art von Bildschirmen mit im Wesentlichen flacher Oberfläche in Frage.

Ferner können die gewünschten eingeschränkten Winkelbereiche für den Modus B2 für eine eingeschränkte Sicht jeweils für die horizontale und vertikale Richtung unabhängig voneinander definiert und umgesetzt werden. Beispielsweise könnte in der vertikalen Richtung ein größerer Winkel oder ggf. gar keine Einschränkung sinnvoll sein, als in der horizontalen Richtung, etwa wenn bei Geldautomaten Personen mit unterschiedlicher Größe etwas sehen sollen, während der Seiteneinblick stark eingeschränkt bleiben soll. Für POS-Zahlterminals sind hingegen auf Grund von Sicherheitsbestimmungen oftmals Sichteinschränkungen im Modus B2 sowohl in horizontaler als in vertikaler Richtung notwendig.

Besonders vorteilhaft findet der erfindungsgemäße Bildschirm Verwendung zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

Ein Lichtleiter zur Verwendung in dem vorbeschriebenen erfindungsgemäßen Bildschirm kann erfindungsgemäß auf die im Folgenden beschriebene Weise hergestellt werden. Zunächst wird eine Vielzahl flächiger, transparenter Silikongummischichten jeweils im Wechsel mit flächigen, mit Streupartikeln dotierten Silikongummischichten aneinander flächig laminiert oder verklebt. Die flächigen Laminier- oder Klebeverbindungen werden anschließend ausgehärtet, bevor mindestens ein Lichtleiter in einer gewünschten Dicke aus dem so erhaltenen laminierten bzw. verklebten Körper abgeschnitten wird, wobei die Schnittrichtung in etwa senkrecht zu der Oberfläche der besagten Silikongummischichten gelegen ist. Optional werden eine oder beide Großflächen des Lichtleiters versiegelt, indem auf die jeweilige Großfläche entsprechend eine oder mehrere Deckschichten aufgebracht werden.

Die mit Streupartikeln dotierten Silikongummischichten bilden somit die Lamellen. Zur Erstellung von Lichtleitern mit gekreuzten Lamellen können zwei entsprechende Lichtleiter mit jeweils für sich genommen nur parallelen Lamellen hergestellt und dann in einem Winkel, z.B. 90 Grad der Lamellen zueinander, entsprechend flächig verklebt werden.

Erfindungsgemäß kann der Lichtleiter zur Verwendung in vorbeschriebenem erfindungsgemäßen Bildschirm noch nach einem anderen Verfahren hergestellt werden, dieses Verfahren umfasst die folgenden Schritte: Zunächst wird eine transparente, thermoplastische oder thermoelastische Kunststoffplatte mit einem Werkzeug bearbeitet, so dass hohle, lamellenartige Strukturen in die besagte Kunststoffplatte eingearbeitet werden. Dies kann beispielsweise durch Pressen eines Werkzeuges in die noch nicht erstarrte Kunststoffplatte erfolgen, durch Fräsen, Lasern oder andere geeignete Verfahren. Anschließend werden die hohlen, lamellenartigen Strukturen mit einer geeigneten, Streupartikel beinhaltenden Emulsion befüllt und überschüssige Reste der besagten Emulsion von der Kunststoffplatte entfernt. Optional kann die Emulsion mittels Energieeintrag, beispielsweise durch UV-Licht, sichtbares Licht oder Wärme, ausgehärtet werden. Ebenfalls optional können anschließend eine oder beide Großflächen der Kunststoffplatte versiegelt werden, indem entsprechend eine Deckschicht aufgebracht wird, z.B. durch Laminieren einer PET-Folie oder eines Polycarbonat-Substrates oder auch durch Lackierung mit einem deckenden, transparenten Schutzlack.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen
- Fig. 1: eine Schnittdarstellung zur Auskopplung von Licht, das seitlich in einen Lichtleiter eingekoppelt wird, mit einer definierten Abstrahlcharakteristik,
- Fig. 2: eine Schnittdarstellung zum Durchgang von Licht, das von einer Bildwiedergabeeinheit herrührt, durch einen Lichtleiter,
- Fig. 3: eine Schnittdarstellung eines Bildschirms in der Betriebsart B2 für einen eingeschränkten Sichtmodus, wobei das durch den Bildgeber modulierte Licht von Licht aus einem Lichtleiter überlagert wird, um den Sichtschutzeffekt zu erzielen,
- Fig. 4: eine Schnittdarstellung des Bildschirms in der Betriebsart B1 für einen freien Sichtmodus, wobei das durch den Bildgeber modulierte Licht nicht von Licht aus dem Lichtleiter überlagert wird,
- Fig. 5: eine Prinzipskizze zu einer vorteilhaften Ausgestaltung des Lichtleiters mit parallelen Mikrolamellen,
- Fig. 6: eine Prinzipskizze zu einer vorteilhaften Ausgestaltung des Lichtleiters mit gekreuzten Mikrolamellen,
- Fig. 7: einen Leuchtdichteverlauf für ideale Auskoppelverhältnisse des Lichtleiters,
- Fig. 8: einen Leuchtdichteverlauf für reale Auskoppelverhältnisse eines Lichtleiters, der als Streupartikel Bariumsulfat enthält,
- Fig. 9: eine spezielle Ausgestaltung eines Bildschirms, bei welcher der Lichtleiter aus zwei Schichten, die ihrerseits Lichtleiter sind, besteht,
- Fig. 10: eine Prinzipskizze zur Ausgestaltung eines Lichtleiters mit in Lamellenform angeordneten Streupartikeln, zuzüglich ausgeschalteten Leuchtmitteln,
- Fig. 11: eine Prinzipskizze zur Ausgestaltung eines Lichtleiters mit in Lamellenform angeordneten Streupartikeln, zuzüglich eingeschalteten Leuchtmitteln,
- Fig. 12: eine Prinzipskizze des erfindungsgemäßen Bildschirms in der Betriebsart B2 für einen eingeschränkten Sichtmodus, und
- Fig. 13: eine Prinzipskizze des erfindungsgemäßen Bildschirms in der Betriebsart B1 für einen freien Sichtmodus.

Die Zeichnungen sind nicht maßstabsgetreu und geben lediglich Prinzipdarstellungen, darunter auch Schnittdarstellungen, wieder.

### Ausführliche Beschreibung der Zeichnungen

In Fig. 1 ist eine Prinzipskizze zur Auskopplung von Licht, das seitlich von Leuchtmitteln 4 in einen Lichtleiter 3 - hier nur als kleiner Ausschnitt in Schnittdarstellung gezeigt - eingekoppelt wird, mit einer definierten Abstrahlcharakteristik, dargestellt. Die kleinen Punkte stilisieren Streupartikel 5 als Streuzentren für das Licht, welches seitlich von den Leuchtmitteln 4 eingekoppelt wird. Auf Grund von Totalreflexion werden Strahlen des eingekoppelten Lichts (fett gezeichnete Strahlen) an der Außenwand wieder zurück in den Lichtleiter 3 geworfen, bis sie schließlich auf Streupartikel 5 zur gewünschten Auskopplung treffen. Die Auskopplung ist durch das Cluster von je fünf dünnen Strahlen pro Streupartikel 5 stilisiert: Dabei stehen die langen Strahlen in Winkeln zur Seite für eine stärkere Lichtauskopplung in Winkelbereiche, die stärker von der Flächennormalen des Lichtleiters 3 weg liegen. Die kürzeren Strahlen stilisieren, dass in Winkelbereiche, die näher an der Flächennormalen des Lichtleiters 3 liegen, schon weniger Licht ausgekoppelt wird, während das Minimum an Licht in Flächennormalenrichtung des Lichtleiters 3 ausgekoppelt wird, hier angezeigt durch den kürzesten Pfeil nach oben. Die Darstellung in Fig. 1 ist zur besseren Erkennbarkeit stark stilisiert; in der Realität ist eine sehr große Vielzahl an Strahlengängen und Streupartikeln 5 im Lichtleiter 3 umgesetzt.

Fig. 2 zeigt eine Prinzipskizze zum Durchgang von Licht, das von einer (hier zeichnerisch nicht dargestellten) Bildwiedergabeeinheit 2 herrührt, durch einen Lichtleiter 3. Die Streupartikel 5 im Lichtleiter 3 spielen dabei eine im Wesentlichen vernachlässigbare Rolle, da das Licht aus der Hintergrundbeleuchtung durch die Bildwiedergabeeinheit 2 herrührt, d.h. nicht seitlich durch eine Schmalseite von Leuchtmitteln 4 eingekoppelt wird und daher nicht bzw. kaum durch Totalreflexion im Lichtleiter 3 hin und her gelenkt wird. In der Betriebsart B1 werden ähnlich die auf das Licht von der Bildwiedergabeeinheit 2 aufmodulierten Bildinformationen entsprechend nahezu unbeeinflusst durch den Lichtleiter 3 hindurchgeleitet.

Fig. 3 gibt eine Prinzipskizze eines Bildschirms 1 in der Betriebsart B2 für einen eingeschränkten Sichtmodus wieder, wobei das durch die Bildwiedergabeeinheit 2 modulierte Licht von Licht aus dem Lichtleiter 3 überlagert wird, um den Sichtschutzeffekt zu erzielen,

Dargestellt in Fig. 3 sind eine Bildwiedergabeeinheit 2, beispielsweise ein LCD- oder OLED-Display, ein in Betrachtungsrichtung vor der Bildwiedergabeeinheit 2 gelegener, plattenförmiger, transparenten Lichtleiter 3 mit einem durchschnittlichen Haze-Wert kleiner als 10%, gemessen gemäß ASTM D1003, und Leuchtmittel 4, die seitlich an einer Schmalseite des Lichtleiters 3 angeordnet sind, vorteilhaft sind weitere Leuchtmittel 4 an der gegenüberliegenden Schmalseite angebracht. Als Leuchtmittel kommen beispielsweise bevorzugt kaltweiße LEDs, z. B. in Zeilenanordnung, in Frage.

Dabei sind in der Betriebsart B2 die Leuchtmittel 4 eingeschaltet, so dass in einer ersten Alternative entweder aufgrund von im Lichtleiter 3 räumlich und/oder von der Konzentration her verteilten Streupartikeln 5 - in Fig. 3 nicht dargestellt - oder aufgrund von auf mindestens einer der Großflächen angeordneten oder ausgebildeten Auskoppelelementen auf mindestens einer der Großflächen - hier der oberen Großfläche - des Lichtleiters 3 eine Licht-Abstrahlcharakteristik erzeugt wird, bei der die durchschnittliche Leuchtdichte gemessen in Winkeln α zur Flächennormale der mindestens einen Großfläche des Lichtleiters 3 mit 0° ≤ α ≤ θ, mit 10° ≤ θ ≤ 60° um mindestens einen Faktor X, mit X ≥ 1,2, kleiner ist als die höchste messbare Leuchtdichte - damit ist der höchste messbare Einzelwert gemeint - derselben Großfläche des Lichtleiters 3, die in Winkeln α > θ zur Flächennormale abgestrahlt wird. Der Winkel α kann beispielsweise 10°, 20°, 30°, 45° oder einer anderen sinnvollen Wert annehmen.

In einer zweiten Alternative weist die Bildwiedergabeeinheit 2 eine Licht-Abstrahlcharakteristik auf, bei welcher in Richtung der Flächennormalen der Bildwiedergabeeinheit 2 eine höhere Leuchtdichte erzielt wird als in einem Winkel von α ≥ θ gegenüber der Flächennormalen.

Dadurch wird in der Betriebsart B2 das von der Bildwiedergabeeinheit 2 ausgehende Licht - in Fig. 3 als dicke, helle Pfeile eingezeichnet -, auf welches Bildinformationen aufmoduliert sind, von Licht überlagert, welches der Lichtleiter 3 flächig abstrahlt, in Anlehnung an Fig. 2 hier mit dünnen Pfeilen unterschiedlicher Länge dargestellt. Dadurch wird die Sichtbarkeit der auf der Bildwiedergabeeinheit dargestellten Bildinformationen aus Betrachtungswinkeln α > θ verringert oder sogar verhindert.

Der Winkel α kann hier gemessen werden entlang der Horizontalen, der Vertikalen und/oder einer anderen Richtung des Bildschirms 1, aber stets zur Flächennormalen. Wenn beispielsweise die vorgegebenen Bedingungen für eine horizontale und vertikale Winkelmessung gelten, kann der Bildschirm 1 in der Betriebsart B2 aus schrägen Winkeln nicht von links, rechts, oben und unten eingesehen werden. Wenn jedoch die vorgegebenen Bedingungen nur für eine horizontale Winkelmessung gelten, kann der Bildschirm 1 in der Betriebsart B2 lediglich aus schrägen Winkeln nicht von links und rechts eingesehen werden. Von oben und unten jedoch ist die Betrachtung dann in der Regel möglich.

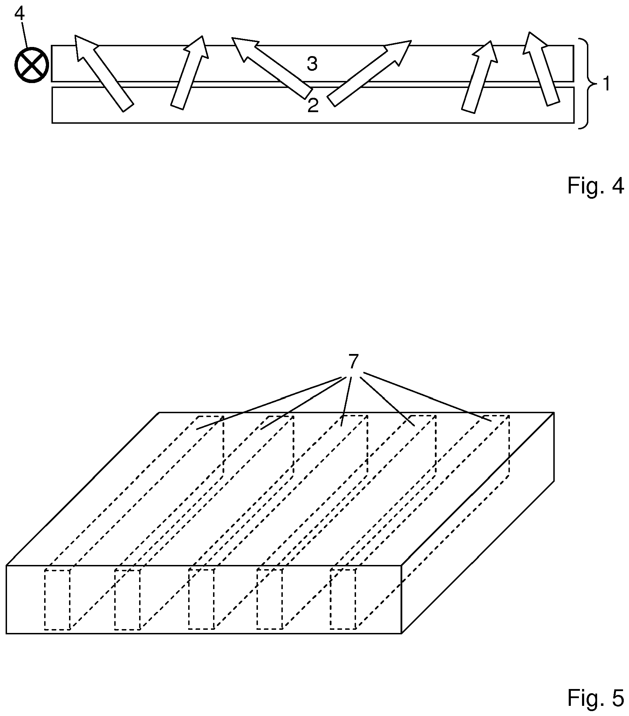

Demgegenüber zeigt Fig. 4 eine Prinzipskizze des Bildschirms 1 in der Betriebsart B1 für einen freien Sichtmodus, wobei das durch die Bildwiedergabeeinheit 2 modulierte Licht (dicke, helle Pfeile) nicht von Licht aus dem Lichtleiter 3 überlagert wird, weil jetzt die Leuchtmittel 4 ausgeschaltet sind. Damit die tritt das Licht der Bildwiedergabeeinheit 2 im Wesentlichen unbeeinflusst durch den Lichtleiter 3 hindurch und erreicht somit den oder die Betrachter im Wesentlichen unbeeinflusst.

Die o.g. Größe X kann hier und in anderen Ausgestaltungen auch anders gewählt werden, etwa X ≥ 2,5 oder X ≥ 4, 5, 6, 10, 20, 50, 100 oder noch größer. Sie ist ein Maß dafür, wieviel stärker der Lichtleiter in "seitliche" Einblickwinkel Licht verglichen mit dem in Flächennormale abgestrahlten Licht abstrahlt.

In einer vorteilhaften Ausgestaltung des Bildschirms 1 sind die Streupartikel 5 im Lichtleiter 3 in der Form von Mikrolamellen 7 eingearbeitet, wobei die Mikrolamellen 7 wiederum in ein transparentes, nicht-streuendes Material eingebettet sind. Die Mikrolamellen können dabei typischerweise zwischen 30 µm und 150 µm dick sowie zwischen 30 µm und 300 µm hoch sein. Der durchschnittliche Mittenabstand von Mikrolamelle zu Mikrolamelle kann regelhaft zwischen 40 µm und 150 µm sein. Andere Werte sind möglich. Wichtig ist, dass das Tastverhältnis von Höhe zu Mittenabstand groß genug ist, um bei Schrägsicht auf die Mikrolamellen genügend Licht auszukoppeln.

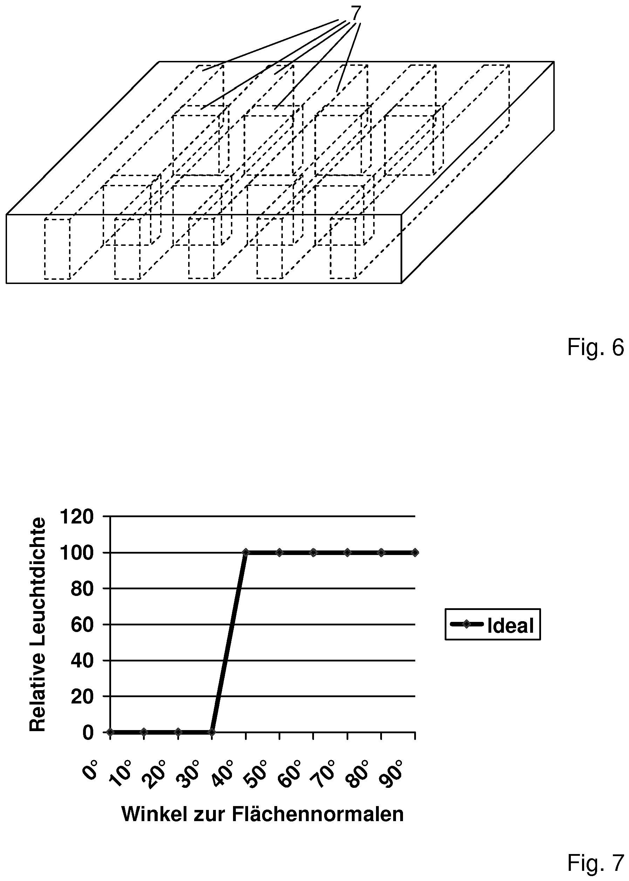

Diesbezüglich zeigt Fig. 5 eine Prinzipskizze zu einer vorteilhaften Ausgestaltung des Lichtleiters 3 mit parallelen Mikrolamellen 7, sowie Fig. 6 eine Prinzipskizze zu einer vorteilhaften Ausgestaltung des Lichtleiters 3 mit gekreuzten Mikrolamellen.

Ferner können die die Mikrolamellen 7 parallel - siehe Fig. 5 - und/oder unter einem Winkel gekreuzt - siehe Fig. 6, hier sind aus Gründen der Übersichtlichkeit nicht alle Mikrolamellen 7 gekennzeichnet - ausgebildet sein. Wenn sie parallel ausgebildet sind, führt die Lichtauskopplung aus ihnen dazu, dass die Lichtüberlagerung mit den dargestellten Bildinformationen nur in einer Dimension die Sichtbarkeit vermindert, z.B. links-rechts oder oben-unten. Sind die Mikrolamellen 7 hingegen gekreuzt ausgebildet, z.B. rechteckig gekreuzt, führt die Lichtauskopplung aus ihnen dazu, dass die Lichtüberlagerung mit den dargestellten Bildinformationen in zwei Dimensionen die Sichtbarkeit vermindert, also gleichzeitig links-rechts und oben-unten.

Bei einer möglichen Umsetzung hierzu bestehen die Mikrolamellen 7 aus einem mit Streupartikeln 5 versetzten Silikongummi. Die Streupartikel 2 können in diesem Falle beispielsweise ausgebildet sein als Titandioxid- oder Bariumsulfat-Partikel, als silsesquioxane Partikeln, und/oder als vernetzte Polystyrol-Partikel, wobei die Mikrolamellen 7 selbst wiederum in transparentem Silikongummi eingebettet sind.

Alternativ kann auch ohne Streupartikel 5 in Mikrolamellenstruktur gearbeitet werden. Dann werden, wie weiter oben schon beschrieben, die Streupartikel im Wesentlichen homogen im Lichtleiter 3 verteilt.

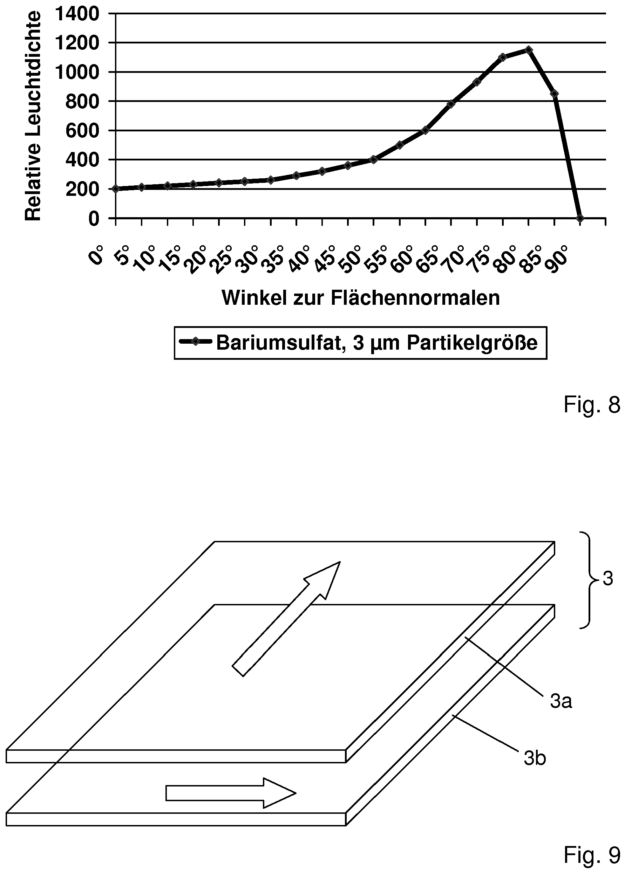

Fig. 7 zeigt beispielhaft den Verlauf der relativen Leuchtdichte in Abhängigkeit vom Winkel zur Flächennormalen für ideale Auskoppelverhältnisse des Lichtleiters 3 in diesem Fall, für einen Winkel θ = 30°. In einem derartigen Idealfall würde auf mindestens einer der Großflächen des Lichtleiters 3 eine Licht-Abstrahlcharakteristik vorherrschen, bei der im Winkelbereich 0° ≤ α ≤ 30° zur Flächennormalen nahezu kein Licht ausgekoppelt wird, und bei der im Winkelbereich 30° ≤ α ≤ 90° zur Flächennormalen Licht mit einer Leuchtdichte, die möglichst annähernd so hoch oder sogar höher als Leuchtdichte des Bildschirms 1 in diese Richtung ist, abgestrahlt wird. Dieser Idealfall ist praktisch jedoch kaum realisierbar. Dementsprechend zeigt Fig. 8 einen Verlauf der relativen Leuchtdichte für reale Auskoppelverhältnisse eines beispielhaften Lichtleiters 3, der als Streupartikel 5 Bariumsulfat-Partikel enthält.

Dadurch kann eine Abstrahlcharakteristik des Lichtleiters 3 erzielt werden, bei der in kleinen Winkeln zur Flächennormalen des Lichtleiters deutlich weniger Licht ausgekoppelt wird, als in großen Winkeln (z.B. größer als 30° oder 45°) hierzu, was ja gewünscht ist.

Eine spezielle Ausgestaltung lässt sich erzielen, wenn wie in Fig. 9 angedeutet der Lichtleiter 3 aus zwei Schichten 3a, 3b besteht, die wiederum selbst Lichtleiter sind, welche durch einen Extrusionsvorgang hergestellt worden sind, wobei die Schichten 3a, 3b derart mit ihren Großflächen eng aneinander anliegen, dass ihre Extrusionsrichtungen - mit Pfeilen dargestellt - gekreuzt sind. Hintergrund ist, dass die Extrusionsrichtung einen starken Einfluss auf die Lichtabstrahlcharakteristik der Lichtleiter 3 hat. Werden die Extrusionsrichtungen gekreuzt, so kann vor der Bildwiedergabeeinheit 2 eine Lichtauskopplung zur Überlagerung von Licht, das von der Bildwiedergabeeinheit 2 herrührt, sowohl nach links-rechts, als auch nach oben-unten erzielt werden. Die Einkopplung von Licht aus den Leuchtmitteln 4 in den Lichtleiter 3 erfolgt dann so, dass in beide Schichten 3a, 3b Licht eingekoppelt wird.

Die Zeichnung Fig.4 lässt sich gedanklich auch zur Erörterung des Bildschirms 1 nach der zweiten Alternative einsetzen, bei der die Bildwiedergabeeinheit 2 die entsprechende Licht-Abstrahlcharakteristik aufweist.

Dabei sind in der Betriebsart B1 die Leuchtmittel 4 ausgeschaltet, so dass das von der Bildwiedergabeeinheit ausgehende Licht, auf welches Bildinformationen aufmoduliert sind, im Wesentlichen unbeeinflusst durch den Lichtleiter 3 hindurchtritt.

In der Betriebsart B2 jedoch, die nicht separat zeichnerisch dargestellt ist, sind die Leuchtmittel 4 eingeschaltet, so dass das von der Bildwiedergabeeinheit ausgehende Licht, auf welches Bildinformationen aufmoduliert sind, von Licht überlagert wird, welches der Lichtleiter 3 flächig abstrahlt, wodurch die Sichtbarkeit der auf der Bildwiedergabeeinheit 2 dargestellten Bildinformationen aus Betrachtungswinkeln α > θ verringert oder sogar verhindert wird. Eine für die zweite Alternative geeignete Bildwiedergabeeinheit 2 lässt sich beispielsweise generieren, wenn in einem LCD zur Lichtkonzentration zwischen dem LCD-Panel und dem Backlight mit gekreuzten OLFs und/oder gekreuzten BEFs gearbeitet wird.

Wesentlich ist insgesamt eine höhere relative Helligkeit des aus dem Lichtleiter 3 herrührenden Lichts gegenüber dem aus der Bildwiedergabeeinheit 2 herrührenden Licht in Winkeln, die für die Sicht blockiert werden sollen, während bei nicht-blockierten Winkeln die Verhältnisse genau umgekehrt liegen, d.h. aus solchen Blickrichtungen soll das Licht der Bildwiedergabeeinheit 2 stärker sein als das überlagernde Licht aus dem Lichtleiter 3.

Für die vorgenannte Lösungsvariante des Bildschirms 1 gemäß der zweiten Alternative gilt, dass der Lichtleiter 3 aus einem transparenten, thermoplastischen oder thermoelastischen Kunststoff und darin im Wesentlichen homogen verteilten Streupartikeln 5 bestehen kann, wobei die Streupartikel 5 beispielsweise bestehen aus Titandioxid, Bariumsulfat, silsesquioxanen Partikeln oder vernetzten Polystyrol-Partikeln.

Bevorzugt werden als Streupartikel 5 im transparenten Lichtleiter 3 Titandioxid-Partikel einer mittleren Partikelgröße von 150 - 500 nm in einer Konzentration bezogen auf das Gewicht des jeweiligen Lichtleiters 3 von 0.01 - 300 Gew.-ppm eingesetzt. Besonders bevorzugt wird für den oder die Lichtleiter 3 eine Konzentration an Streupartikeln von Titandioxid-Partikel von 0.1 - 50 Gew.-ppm, bevorzugt 0.1 - 10 Gew.-ppm eingesetzt. Dabei haben die Titandioxidpartikel eine mittlere Partikelgröße von 160 bis 450 nm, besonders bevorzugt jedoch von 170 bis 400 nm. Der Haze-Wert der Lichtleiter 3, gemessen nach ASTM D1003, liegt im Bereich von 0, 2 bis 2%.

Es ist allerdings auch möglich, als Streupartikel 5 Bariumsulfat in ca. 3 µm Partikelgröße, vernetzte Polystyrol Partikel in ca. 4 µm Partikelgröße oder silsesquioxane Partikel mit ca. 2 µm Partikelgröße in geeigneten Konzentrationen einzusetzen.

Außerdem kann der Lichtleiter 3 mindestens 40 Gew.%, bevorzugt mindestens 60 Gew. %, Polymethylmethacrylat bezogen auf sein Gewicht, beinhalten.

Dadurch kann eine Abstrahlcharakteristik des Lichtleiters 3 erzielt werden, bei der in kleinen Winkeln zur Flächennormalen des Lichtleiters 3 deutlich weniger Licht ausgekoppelt wird, als in großen Winkeln, z.B. größer als 30° oder 45°, hierzu.

Ferner weist der plattenförmige Lichtleiter mindestens zwei einander gegenüberliegende Großflächen auf, die parallel oder geneigt zueinander angeordnet sind. Eine keilförmige Struktur ist auch möglich, wenngleich parallele Großflächen von Vorteil sind. Sinnvolle Dicken des Lichtleiters liegen typischerweise zwischen einschließlich 0,5 mm und einschließlich 4 mm. Andere Dicken können fallbedingt auch sinnvoll sein.

Für alle Ausgestaltungen gilt, dass die Bildwiedergabeeinheit zum Beispiel ein LCD, OLED, Plasma-Display, FED-Bildschirm, SED-Bildschirm, VFC-Bildschirm oder eine andere Art von Bildschirm 1 sein kann. Die Bildwiedergabeeinheit kann aber auch statischer Natur sein, etwa eine von hinten beleuchtete Folie oder sogar ein gedrucktes Bild. Weitere Varianten sind möglich.

In allen Ausgestaltungen der Erfindung können die besagten Leuchtmittel LEDs bzw. LED-Zeilen oder Laserdioden sein. Andere Varianten sind denkbar und liegen im Rahmen der Erfindung.

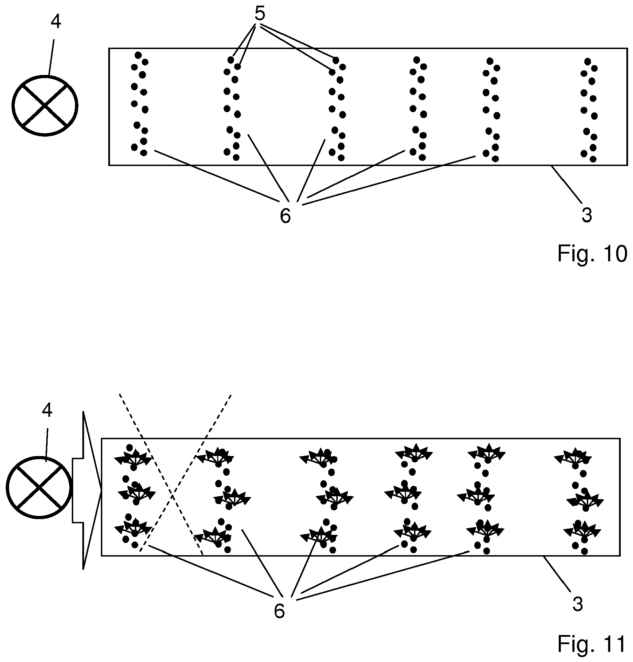

Fig.10 zeigt eine Prinzipskizze zur Ausgestaltung eines Lichtleiters 3 mit in Lamellenform 6 angeordneten Streupartikeln 5, zuzüglich ausgeschalteten Leuchtmitteln 4.

Demgegenüber gibt Fig. 11 eine Prinzipskizze zur Ausgestaltung eines Lichtleiters 3 mit in Lamellenform 6 angeordneten Streupartikeln 5 wieder, wobei jetzt die Leuchtmittel 4 eingeschaltet sind. Stilisiert zu sehen sind auch von den in Lamellenformen 6 angeordneten Streupartikeln 5, welche z.B. aus Titandioxid in weiter oben beschriebenen Konzentration und Größen eingebracht sind, ausgehende Lichtstrahlen. Diese sind als kleine bzw. kurze dicke Pfeile eingezeichnet. Die beiden gekreuzten Strichlinien deuten an, dass ein Blick durch den Lichtleiter 3 im Zustand der eingeschalteten Leuchtmittel 4 auf Grund der Lichtabstrahlung der Streupartikel 5 eingeschränkt ist.

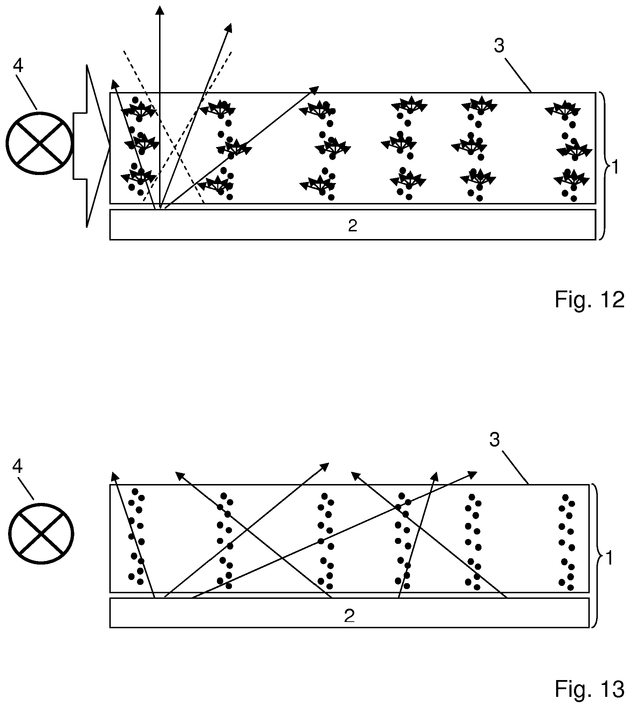

Ferner zeigt die Fig. 12 eine Prinzipskizze eines Bildschirms 1 mit einem solchen Lichtleiter 3 und einer Bildwiedergabeeinheit 2 in der Betriebsart B2 für einen eingeschränkten Sichtmodus. Dort sind, entsprechend der Zeichnung Fig. 11, die Leuchtmittel 4 eingeschaltet. Somit werden die von der Bildwiedergabeeinheit 2 ausgehenden Lichtstrahlen - hier als lange durchgezogene Linien dargestellt - von Licht überlagert, welches von den Streupartikeln 5 ausgeht. Im Ergebnis kann ein Betrachter von oben nur aus einem eingeschränkten Winkelbereich, welcher durch die gestrichelten Linien angedeutet ist, unbeeinträchtigt auf die Bildwiedergabeeinheit 2 schauen. Bei Schrägsicht sorgt die Überlagerung mit Licht aus den Streupartikeln 5 dafür, dass das auf der Bildwiedergabeeinheit 2 gezeigte Bild entweder komplett oder zumindest teilweise überblendet wird. Damit wird die Betriebsart B2 ermöglicht.

Sinngemäß lässt sich Fig. 12 auch zur Erläuterung der Ausgestaltung mit fluoreszierenden Partikeln als Streupartikel 5 im Lichtleiter 3 heranziehen: Dann nämlich emittieren die Leuchtmittel 4 in der Betriebsart B2 UV-Licht, welches vom Lichtleiter 3 an die in Lamellenform 6 angeordneten Streupartikel geleitet wird, welches diese wiederum zum Leuchten im sichtbaren Spektrum anregt. Bei Schrägsicht sorgt die Überlagerung mit diesem Licht aus den Streupartikeln 5 dafür, dass das auf der Bildwiedergabeeinheit 2 gezeigte Bild entweder komplett oder zumindest teilweise überblendet wird. Damit wird die Betriebsart B2 ermöglicht.

Schließlich zeigt Fig. 13 eine Prinzipskizze eines Bildschirms 1 mit der Bildwiedergabeeinheit 2 in der Betriebsart B1 für einen freien Sichtmodus. Dort sind, entsprechend der Zeichnung Fig. 10, die Leuchtmittel 4 ausgeschaltet. Somit werden die von der Bildwiedergabeeinheit 2 ausgehenden Lichtstrahlen - hier als lange durchgezogene Linien dargestellt - nicht von Licht überlagert, da kein Licht von den Streupartikeln 5 ausgeht. Im Ergebnis kann ein Betrachter von oben aus einem beliebigen Winkel unbeeinträchtigt auf die Bildwiedergabeeinheit 2 schauen, da die Streupartikel 5 im Wesentlichen wirkungslos für das von der Bildwiedergabeeinheit 2 ausgehende Licht sind. Somit wird die Betriebsart B1 ermöglicht.

Die beschriebenen Lichtleiter als Teil eines Bildschirms sind vorn auf dem Bildschirm platzierbar, so dass sie für möglichst viele Arten von Bildschirmen, wie etwa LCD und OLED, verwendbar ist. Ein Eingriff etwa in die Hintergrundbeleuchtung von LCDs ist nicht notwendig.

Die vorstehend beschriebenen Bildschirme erlauben praktisch gut umsetzbare Lösungen, um eine sichere Darstellung von Informationen durch einen wahlweise eingeschränkten Betrachtungswinkel zu realisieren, während in einer weiteren Betriebsart eine freie, möglichst im Betrachtungswinkel uneingeschränkte Sicht möglich ist. Die Erfindung ist mit einfachen Mitteln preisgünstig realisierbar. In beiden Betriebsarten ist die native Auflösung des verwendeten Bildgeber nutzbar. Außerdem wird nur ein geringer bzw. je nach Ausgestaltung sogar kein Lichtverlust durch die Lösung eingeführt.

Die vorangehend beschriebene Erfindung kann vorteilhaft überall da angewendet werden, wo vertrauliche Daten angezeigt und/oder eingegeben werden, wie etwa bei der PIN-Eingabe oder zur Datenanzeige an Geldautomaten oder Zahlungsterminals oder zur Passworteingabe oder beim Lesen von Emails auf mobilen Geräten.

### Bezugszeichenliste

- 1: Bildschirm
- 2: Bildwiedergabeeinheit
- 3: Lichtleiter
- 3a, 3b: Schichten des Lichtleiters
- 4: Leuchtmittel
- 5: Streupartikel
- 6: Lamellenform
- 7: Mikrolamelle
- B1: Betriebsart für einen freien Sichtmodus
- B2: Betriebsart für einen eingeschränkten Sichtmodus

## Patentansprüche

1. Bildschirm (1), der in einer ersten Betriebsart B1 für einen freien Sichtmodus und in einer zweiten Betriebsart B2 für einen eingeschränkten Sichtmodus betrieben werden kann, umfassend
- eine Bildwiedergabeeinheit (2),
- einen in Betrachtungsrichtung vor der Bildwiedergabeeinheit (2) gelegenen, plattenförmigen, transparenten Lichtleiter (3) und
- Leuchtmittel (4), die seitlich an Schmalseiten des Lichtleiters (3) angeordnet sind,
- wobei
- der Lichtleiter (3) einen Haze-Wert kleiner als 20%, gemessen gemäß ASTM D1003, aufweist,
- wobei in der Betriebsart B1 die Leuchtmittel (4) ausgeschaltet sind, so dass das von der Bildwiedergabeeinheit (2) ausgehende Licht, auf welches Bildinformationen aufmoduliert sind, im Wesentlichen unbeeinflusst durch den Lichtleiter (3) hindurchtritt, und
- wobei in der Betriebsart B2 die Leuchtmittel (4) eingeschaltet sind, und in einer ersten Alternative entweder aufgrund von im Lichtleiter (3) räumlich homogen oder von der Konzentration her räumlich verteilten Streupartikeln (5) oder aufgrund von auf mindestens einer der Großflächen angeordneten Auskoppelelementen auf mindestens einer der Großflächen des Lichtleiters (3) eine Licht-Abstrahlcharakteristik erzeugt wird, bei der die durchschnittliche Leuchtdichte gemessen in Winkeln α zur Flächennormale der mindestens einen Großfläche des Lichtleiters (3) mit 0° ≤ α ≤ θ, mit 10° ≤ θ ≤ 60° um mindestens den Faktor X, mit X ≥ 1,2, kleiner ist als die höchste messbare Leuchtdichte derselben Großfläche des Lichtleiters (3), die in Winkeln α > θ zur Flächennormale abgestrahlt wird, oder indem in einer zweiten Alternative die Bildwiedergabeeinheit (2) eine Licht-Abstrahlcharakteristik aufweist, bei welcher in Richtung der Flächennormalen der Bildwiedergabeeinheit (2) eine höhere Leuchtdichte erzielt wird als in einem Winkel von α ≥ θ gegenüber der Flächennormalen,
- so dass in der Betriebsart B2 das von der Bildwiedergabeeinheit (2) ausgehende Licht, auf welches Bildinformationen aufmoduliert sind, von Licht überlagert wird, welches der Lichtleiter (3) flächig über einen großen Winkelbereich abstrahlt, wodurch die Sichtbarkeit der auf der Bildwiedergabeeinheit (2) dargestellten Bildinformationen aus Betrachtungswinkeln α > θ verringert oder sogar verhindert wird.

2. Bildschirm (1) nach Anspruch 1, wobei der Haze-Wert des Lichtleiters (3) kleiner als 10%, bevorzugt kleiner als 5% ist, und/oder der Winkel θ 10°, 30°, 45° beträgt, und/oder der Faktor X ≥ 2,5 ist.

3. Bildschirm (1) nach einem der Ansprüche 1 oder 2, wobei der
Winkel θ in Abhängigkeit von der eingestrahlten Lichtmenge vorgebbar ist.

4. Bildschirm (1) nach einem der Ansprüche 1 bis 3, erste Alternative, wobei bei Vorhandensein von Streupartikeln (5) der Lichtleiter (3) aus einem transparenten, thermoplastischen oder thermoelastischen Kunststoff besteht, in welchem die Streupartikel (5) im Wesentlichen homogen verteilt sind, wobei die Streupartikel (5) bevorzugt aus Titandioxid, Bariumsulfat, silsesquioxanen Partikeln oder vernetzten Polystyrol-Partikeln bestehen.

5. Bildschirm (1) nach Anspruch 4, wobei der transparente Lichtleiter (3) aus einem Matrixkunststoff A und darin verteilten Streupartikeln (5) aus einem Polymerisat B besteht, wobei der Anteil der Streupartikel (5) bestehend aus Polymerisat B jeweils 0,00001 bis 5 Gewichtsprozent bezogen auf den Matrixkunststoff A beträgt, und die Brechzahl nD(B) des Polymerisats B um mindestens 0,002 Einheiten über der Brechzahl nD(A) des Matrixkunststoffs A liegt.

6. Bildschirm (1) nach Anspruch 1, zweite Alternative, oder Anspruch 2 bis 5, wobei
der Lichtleiter (3) aus zwei Schichten (3a, 3b) besteht, die wiederum selbst Lichtleiter sind, welche durch einen Extrusionsvorgang hergestellt worden sind, wobei die Schichten (3a, 3b) derart mit ihren Großflächen aneinander anliegen, dass ihre Extrusionsrichtungen gekreuzt sind.

7. Bildschirm (1) nach Anspruch 1, erste Alternative, wobei vor
dem Lichtleiter (3) in Betrachtungsrichtung ein weiterer Lichtleiter angeordnet ist, und an jeweils einer der Großflächen des Lichtleiters (3) und des weiteren Lichtleiters Auskoppelelemente angeordnet oder ausgebildet sind, wobei Leuchtmittel (4) an einer Schmalseite des Lichtleiters (3) und an der dieser Schmalseite gegenüberliegenden Schmalseite des weiteren Lichtleiters angeordnet sind, und wobei durch die Auskoppelelemente eine asymmetrische Licht-Abstrahlcharakteristik derart vorgegeben ist, dass das Licht in den in Einstrahlrichtung liegenden Viertelraum abgestrahlt wird.

8. Bildschirm (1) nach einem der Ansprüche 1 bis 7, wobei die
Leuchtmittel (4) Licht in einer Farbe abstrahlen, welche im von der Bildwiedergabeeinheit (2) dargestellten Bild nicht vorkommt.

9. Bildschirm (1) nach einem der Ansprüche 1 bis 8, wobei die Leuchtmittel (4) Licht in einer Farbe abstrahlen, welche im von der Bildwiedergabeeinheit (2) dargestellten Bild vorkommt bzw. im Farbspektrum nahe an einer solchen Farbe liegt.

10. Bildschirm (1) nach einem der Ansprüche 1 bis 9, wobei die Leuchtmittel (4) Licht in einer Farbe abstrahlen, die in etwa der Komplementärfarbe einer Farbe, welche im von der Bildwiedergabeeinheit (2) dargestellten Bild vorkommt, entspricht.

11. Bildschirm (1) nach Anspruch 1, erste Alternative, wobei
- der Lichtleiter (3) aus Kunststoff besteht,
- im Lichtleiter (3) Streupartikel (5) in Form von parallel oder gekreuzt verlaufenden, länglichen Lamellen (6) verteilt sind, wobei jedoch außerhalb der Lamellen (6) keine Streupartikel (5) im Lichtleiter (3) eingebracht sind, und optional an mindestens einer der Großflächen des Lichtleiters (3) Auskoppelelemente aufgebracht sind,
- wodurch in der Betriebsart B2 das von der Bildwiedergabeeinheit (2) herrührende Licht von Licht überlagert wird, welches der Lichtleiter (3) nunmehr nahezu ausschließlich aus den in Form von Lamellen (6) angeordneten Streupartikeln (5) abstrahlt, wodurch die Sichtbarkeit eines auf der Bildwiedergabeeinheit (2) dargestellten Bildes bei Schrägsicht auf die Bildwiedergabeeinheit (2) eingeschränkt wird.

12. Bildschirm (1) nach Anspruch 11, wobei als Streupartikel (5) in dem transparenten Lichtleiter (3) Titandioxid-Partikel einer mittleren Partikelgröße von 150 - 500 nm in einer Konzentration bezogen auf das Gewicht des Lichtleiters (3) von 0.01 - 300 Gew.-ppm eingesetzt werden.

13. Bildschirm (1) nach Anspruch 11, wobei der transparente Lichtleiter (3) aus einem Matrixkunststoff A und darin verteilten Streupartikel (5) aus einem Polymerisat B besteht, wobei der Anteil der Streupartikel (5) bestehend aus Polymerisat B jeweils 0,01 bis 3 Gewichtsprozent bezogen auf den Matrixkunststoff A beträgt, und die Brechzahl nD(B) des Polymerisats B um mindestens 0,002 Einheiten über der Brechzahl nD(A) des Matrixkunststoffs A liegt.

14. Bildschirm (1) nach Anspruch 11, wobei als Streupartikel (5)
fluoreszierende Partikel eingesetzt werden, die bei Beleuchtung mit UV-Licht sichtbares Licht abstrahlen, und als Leuchtmittel (4) LEDs eingesetzt werden, die UV-Licht abstrahlen.

15. Bildschirm (1) nach einem der Ansprüche 11 bis 14, wobei auf
der Oberseite der Bildwiedergabeeinheit (2) und/oder auf mindestens einer der Großflächen des Lichtleiters (3) Mittel zur Reflexminderung, beispielsweise eine Antiglare- und/oder ein Antireflexbeschichtung, angeordnet sind.

16. Bildschirm (1) nach einem der Ansprüche 11 bis 15, wobei die
Leuchtmittel (4) Licht in einer oder mehreren vorgegebenen Farben abstrahlend ausgebildet sind.

17. Verwendung eines Bildschirms (1) nach einem der Ansprüche 11 bis 16 zur Eingabe oder Anzeige von vertraulichen Daten, beispielweise von PIN-Geheimnummern, E-Mails, SMS oder Passwörtern, an Geldautomaten, Zahlungsterminals oder mobilen Geräten.

18. Verfahren zur Herstellung eines Bildschirms (1) gemäß einem der Ansprüche 11 bis 16, umfassend die folgenden Schritte zur Herstellung des darin enthaltenen Lichtleiters (3):
- Flächiges Laminieren oder Verkleben einer Vielzahl von flächigen, transparenten Silikongummischichten jeweils im Wechsel mit flächigen, mit Streupartikeln (5) dotierten Silikongummischichten aneinander,
- Aushärten der besagten flächigen Laminier- oder Verklebeverbindungen,
- Abschneiden mindestens eines Lichtleiters (3) in gewünschter Dicke aus dem so erhaltenen laminierten bzw. verklebten Körper, wobei die Schnittrichtung in etwa senkrecht zu der Oberfläche der besagten Silikongummischichten gelegen ist.

19. Verfahren nach Anspruch 19, wobei eine oder beide Großflächen des Lichtleiters (3) versiegelt werden, indem auf die jeweilige Großfläche eine Deckschicht oder mehrere Deckschichten aufgebracht werden.

## Claims

1. A screen (1) that can be operated in a first operating mode B1 for a free viewing mode, and a second operating mode B2 for a restricted viewing mode, comprising
- an image display unit (2),
- a plate-shaped, transparent light guide (3) disposed in front of the image display unit (2) as seen in the viewing direction, and
- light sources (4) arranged laterally at edges of the light guide (3),
- wherein
- the light guide (3) has a haze value of less than 20%, measured according to ASTM D1003,
- wherein in operating mode B1 the light sources (4) are switched off, so that the light originating from the image display unit (2), with image information modulated upon it, passes the light guide (3) essentially unaffected, and
- wherein in operating mode B2 the light sources (4) are switched on, and, in a first alternative, either due to scattering particles (5) distributed in the light guide (3) in space or regarding their concentration, or due to outcoupling elements arranged on at least one of the large faces of the light guide (3), a light-radiating characteristic is produced at which the average luminance, measured at angles α relative to the surface normal of the at least one large face of the light guide (3) with 0° ≤ α ≤ θ, is, with 10° ≤ θ ≤ 60°, smaller at least by a factor X, with X ≥ 1.2, than the highest measurable luminance on the same large face of the light guide (3), radiated at angles α > θ relative to the surface normal, or wherein, in a second alternative, the image display unit (2) has a light-radiating characteristic at which the luminance achieved in the direction of the surface normal of the image display unit (2) is higher than that achieved at an angle of α ≥ θ relative to that surface normal,
- so that in operating mode B2 the light originating from the image display unit (2), with image information modulated upon it, is superimposed by light radiated by the surface of the light guide (3) over a wide angular range, whereby, from viewing angles α > θ, the visibility of the image information presented on the image display unit (2) is diminished or even prevented.

2. The screen (1) as claimed in Claim 1, wherein the haze value of the light guide (3) is less than 10%, preferably less than 5%, and/or the angle θ is 10°, 30° or 45°, and/or the factor X is ≥ 2.5.

3. The screen (1) as claimed in any one of Claims 1 or 2, wherein the angle θ can be specified as a function of the quantity of light irradiated.

4. The screen (1) as claimed in any one of Claims 1 to 3, first alternative, wherein, if scattering particles (5) are provided, the light guide (3) consists of a transparent, thermoplastic or thermoelastic material, in which the scattering particles (5) are distributed essentially homogeneously, with the scattering particles (5) preferably consisting of titanium dioxide, barium sulphate, silsesquioxane particles or cross-linked polystyrene particles.

5. The screen (1) as claimed in Claim 4, wherein the transparent light guide (3) consists of a matrix plastic A and, distributed therein, scattering particles (5) of a polymerisate B, with the share of the scattering particles (5) of polymerisate B being 0.00001 to 5 wt.-% related to the matrix plastic A, and the refractive index nD(B) of the polymerisate B being at least 0.002 units above the refractive index nD(A) of the matrix plastic A.

6. The screen (1) as claimed in Claim 1, second alternative, or in any one of Claims 2 to 5, wherein the light guide (3) consists of two layers (3a, 3b), which themselves are light guides manufactured by an extrusion process, with the layers (3a, 3b) having their large faces contacting each other in such a way that their extrusion directions cross each other.

7. The screen (1) as claimed in Claim 1, first alternative, wherein another light guide is arranged in front of the light guide (3) as seen in the viewing direction, and outcoupling elements are arranged or formed on one each of the large faces of the light guide (3) and of the other light guide, wherein light sources (4) are arranged at one edge of the light guide (3) and at the edge, facing that light guide edge, of the other light guide, and wherein the outcoupling elements define an asymmetric light-radiating characteristic in such a way that light is radiated into the quarter-space lying in the irradiation direction.

8. The screen (1) as claimed in any one of Claims 1 to 7, wherein the light sources (4) radiate light of a colour that does not occur in the image presented on the image display unit (2).

9. The screen (1) as claimed in any one of Claims 1 to 8, wherein the light sources (4) radiate light of a colour that occurs in the image presented on the image display unit (2) or is close to such a colour in the colour spectrum.

10. The screen (1) as claimed in any one of Claims 1 to 9, wherein the light sources (4) radiate light of a colour approximately corresponding to the colour that is complementary to a colour occurring in the image presented on the image display unit (2).

11. The screen (1) as claimed in Claim 1, fist alternative, wherein
- the light guide (3) consists of plastic,
- scattering particles (5) in the form of parallel or crossed oblong louvers (6) are distributed in the light guide (3), however, with no scattering particles (5) being contained in the light guide (3) outside the louvers (6), and optionally with outcoupling elements being applied to at least one of the large faces of the light guide (3),
- whereby in operating mode B1 the light coming from the image display unit (2) is superimposed by light radiated by the light guide (3) now almost exclusively from the scattering particles (5) arranged in the form of louvers (6), whereby, for someone looking at the image display unit (2) obliquely, the visibility of an image presented on the image display unit (2) is restricted.

12. The screen (1) as claimed in Claim 11, wherein the scattering particles (5) contained in the transparent light guide (3) are titanium dioxide particles of a mean particle size of 150 to 500 nm in a concentration of 0.01 to 300 wt.-ppm related to the weight of the light guide (3).

13. The screen (1) as claimed in Claim 11, wherein the transparent light guide (3) consists of a matrix plastic A and, distributed therein, scattering particles (5) of a polymerisate B, with the share of the scattering particles (5) of polymerisate B being 0.01 to 3 wt.-% related to the matrix plastic A, and the refractive index nD(B) of the polymerisate B being at least 0.002 units above the refractive index nD(A) of the matrix plastic A..

14. The screen (1) as claimed in Claim 11, wherein the scattering particles (5) employed are fluorescent particles which, when illuminated with UV light, radiate visible light, and wherein the light sources (4) employed are LEDs that emit UV light.

15. The screen (1) as claimed in any one of Claims 11 to 14, wherein reflection-diminishing means, e.g., an antiglare and/or antireflection coating, are arranged on the top surface of the image display unit (2) and/or on at least one of the large faces of the light guide (3).

16. The screen (1) as claimed in any one of Claims 11 to 15, wherein the light sources (4) are adapted to emit light in one or several specified colours.

17. Use of a screen (1) as claimed in any one of Claims 11 to 16 for entering or displaying confidential data, e.g., PINs, E-mails, SMS texts or passwords, at ATMs, payment terminals or mobile devices.

18. A method for manufacturing a screen (1) as claimed in anyone of Claims 11 to 16, comprising the following steps for fabricating the light guide (3) contained therein:
- planar lamination or adhesive bonding of a great number of planar, transparent silicone rubber layers alternating with planar silicone rubber layers doped with scattering particles (5),
- curing the said planar laminated or adhesively bonded joints,
- cutting off at least one light guide (3) of the desired thickness from the laminated or adhesively bonded body thus obtained, with the cutting direction being approximately normal to the surface of the said silicone rubber layers.

19. The method as claimed Claim 19, wherein one or both large faces of the light guide (3) are sealed by way of applying one or several cover layers onto the respective large face.

## Revendications

1. Écran (1), qui peut être exploité dans un premier mode de fonctionnement B1 pour un mode de visualisation dégagée et dans un second mode de fonctionnement B2 pour un mode de visualisation restreinte, comprenant
- une unité de reproduction d'images (2),
- un conducteur optique (3) transparent, en forme de plaque, situé devant l'unité de reproduction d'images (2) dans le sens d'observation et
- des moyens d'éclairage (4), qui sont disposés latéralement sur les côtés étroits du conducteur optique (3),
- dans lequel
- le conducteur optique (3) présente une valeur de voile inférieure à 20 %, mesurée selon ASTM D1003,
- dans lequel, dans le mode de fonctionnement B1, les moyens d'éclairage (4) sont désactivés, de telle sorte que la lumière provenant de l'unité de reproduction d'images (2), sur laquelle des informations d'image sont modulées, traverse le conducteur optique (3) de manière sensiblement non influencée, et
- dans lequel, dans le mode de fonctionnement B2, les moyens d'éclairage (4) sont activés, et, dans une première variante, soit en raison de particules de diffusion (5) distribuées de manière homogène dans l'espace ou distribuées dans l'espace en ce qui concerne la concentration dans le conducteur optique (3), soit en raison d'éléments d'extraction disposés sur au moins une des grandes surfaces, une caractéristique de rayonnement de la lumière est générée sur au moins une des grandes surfaces du conducteur optique (3), selon laquelle la luminance moyenne mesurée à des angles α par rapport à la normale à la surface de l'au moins une grande surface du conducteur optique (3), où 0° ≤ α ≤ θ, où 10° ≤ θ ≤ 60° est inférieure d'au moins le facteur X, où X ≥ 1,2, à la luminance maximale mesurable de la même grande surface du conducteur optique (3), qui est émise à des angles α > θ par rapport à la normale à la surface, ou dans lequel dans une seconde variante, l'unité de reproduction d'images (2) présente une caractéristique de rayonnement de lumière selon laquelle, dans la direction de la normale à la surface de l'unité de reproduction d'images (2), une luminance supérieure à celle à un angle α ≥ θ par rapport à la normale à la surface est obtenue,
- de telle sorte que, dans le mode de fonctionnement B2, la lumière provenant de l'unité de reproduction d'images (2), sur laquelle des informations d'image sont modulées, est recouverte par la lumière que le conducteur optique (3) émet en surface sur une grande zone angulaire, moyennant quoi la visibilité des informations d'image représentées sur l'unité de reproduction d'images (2) est diminuée, voire même empêchée depuis des angles d'observation α > θ.

2. Écran (1) selon la revendication 1, dans lequel la valeur de voile du conducteur optique (3) est inférieure à 10 %, de préférence inférieure à 5 %, et/ou l'angle θ est de 10°, 30°, 45°, et/ou le facteur X est ≥ 2,5.

3. Écran (1) selon l'une des revendications 1 ou 2, dans lequel l'angle θ peut être spécifié en fonction de la quantité de lumière incidente.

4. Écran (1) selon l'une des revendications 1 à 3, première variante, dans lequel en cas de présence de particules de diffusion (5), le conducteur optique (3) est constitué d'une matière plastique transparente, thermoplastique ou thermoélastique, dans laquelle les particules de diffusion (5) sont distribuées de manière sensiblement homogène, les particules de diffusion (5) étant de préférence constituées de dioxyde de titane, de sulfate de baryum, de particules de silsesquioxane ou de particules de polystyrène réticulé.

5. Écran (1) selon la revendication 4, dans lequel le conducteur optique (3) transparent est constitué d'une matière plastique de matrice A et de particules de diffusion (5) en un produit de polymérisation B distribuées dans celle-ci, la proportion des particules de diffusion (5) constituées du produit de polymérisation B étant de respectivement 0,00001 à 5 pour cent en poids par rapport à la matière plastique de matrice A, et l'indice de réfraction nD(B) du produit de polymérisation B est supérieur d'au moins 0,002 unités à l'indice de réfraction nD(A) de la matière plastique de matrice A.

6. Écran (1) selon la revendication 1, seconde variante, ou selon les revendications 2 à 5, dans lequel le conducteur optique (3) est constitué de deux couches (3a, 3b), qui de leur côté sont elles-mêmes conductrices optiques, qui ont été fabriquées dans un processus d'extrusion, les couches (3a, 3b) reposant l'une contre l'autre par leur grande surface de telle manière que leurs directions d'extrusion sont croisées.

7. Écran (1) selon la revendication 1, première variante, dans lequel un autre conducteur optique est disposé devant le conducteur optique (3) dans le sens d'observation, et des éléments d'extraction sont disposés ou formés sur respectivement une des grandes surfaces du conducteur optique (3) et de l'autre conducteur optique, des moyens d'éclairage (4) étant disposés sur un côté étroit du conducteur optique (3) et sur le côté étroit de l'autre conducteur optique opposé à ce côté étroit, et une caractéristique de rayonnement de lumière asymétrique étant prédéfinie par les éléments d'extraction de telle manière que la lumière est émise dans le quart de l'espace se trouvant dans la direction d'incidence.

8. Écran (1) selon l'une des revendications 1 à 7, dans lequel les moyens d'éclairage (4) émettent de la lumière dans une couleur qui n'est pas présente dans l'image représentée par l'unité de reproduction d'images (2).

9. Écran (1) selon l'une des revendications 1 à 8, dans lequel les moyens d'éclairage (4) émettent de la lumière dans une couleur qui est présente dans l'image représentée par l'unité de reproduction d'images (2) ou qui se trouve proche d'une telle couleur dans le spectre des couleurs.

10. Écran (1) selon l'une des revendications 1 à 9, dans lequel les moyens d'éclairage (4) émettent de la lumière dans une couleur qui correspond approximativement à la couleur complémentaire d'une couleur qui est présente dans l'image représentée par l'unité de reproduction d'images (2).

11. Écran (1) selon la revendication 1, première variante, dans lequel
- le conducteur optique (3) est constitué de matière plastique,
- des particules de diffusion (5) sous la forme de lamelles (6) allongées parallèles ou croisées sont distribuées dans le conducteur optique (3), aucune particule de diffusion (5) n'étant toutefois placée dans le conducteur optique (3) en dehors des lamelles (6), et des éléments d'extraction sont installés facultativement sur au moins une des grandes surfaces du conducteur optique (3),
- moyennant quoi, dans le mode de fonctionnement B2, la lumière provenant de l'unité de reproduction d'images (2) est recouverte par de la lumière que le conducteur optique (3) émet à présent presque exclusivement depuis les particules de diffusion (5) disposées sous la forme de lamelles (6), moyennant quoi la visibilité d'une image représentée sur l'unité de reproduction d'images (2) est restreinte lors d'une observation oblique de l'unité de reproduction d'images (2).

12. Écran (1) selon la revendication 11, dans lequel des particules de dioxyde de titane d'une taille de particule moyenne de 150 à 500 nm dans une concentration de 0,01 à 300 ppm en poids par rapport au poids du conducteur optique (3) sont utilisées en guise de particules de diffusion (5) dans le conducteur optique (3) transparent.

13. Écran (1) selon la revendication 11, dans lequel le conducteur optique (3) transparent est constitué d'une matière plastique de matrice A et de particules de diffusion (5) en un produit de polymérisation B distribuées dans celle-ci, la proportion des particules de diffusion (5) constituées du produit de polymérisation B étant de respectivement 0,01 à 3 pour cent en poids par rapport à la matière plastique de matrice A, et l'indice de réfraction nD(B) du produit de polymérisation B étant supérieur d'au moins 0,002 unités à l'indice de réfraction nD(A) de la matière plastique de matrice A.

14. Écran (1) selon la revendication 11, dans lequel des particules fluorescentes sont utilisées en guise de particules de diffusion (5), qui émettent de la lumière visible en cas d'éclairage avec une lumière UV, et des LED émettant de la lumière UV sont utilisées comme moyens d'éclairage (4).

15. Écran (1) selon l'une des revendications 11 à 14, dans lequel des moyens destinés à diminuer les reflets, par exemple un revêtement anti-éblouissement et/ou antireflet, sont disposés sur la face supérieure de l'unité de reproduction d'images (2) et/ou sur au moins une des grandes surfaces du conducteur optique (3).

16. Écran (1) selon l'une des revendications 11 à 15, dans lequel les moyens d'éclairage (4) sont réalisés de manière à émettre de la lumière dans une ou plusieurs couleurs prédéfinies.

17. Utilisation d'un écran (1) selon l'une des revendications 11 à 16, pour la saisie ou l'affichage de données confidentielles, par exemple de numéros de code confidentiel PIN, de courriels, de SMS ou de mots de passe, sur des distributeurs automatiques, des terminaux de paiement ou des appareils mobiles.

18. Procédé de fabrication d'un écran (1) selon l'une des revendications 11 à 16, comprenant les étapes suivantes pour la fabrication du conducteur optique (3) inclus dans celui-ci :
- stratification ou collage des surfaces d'une pluralité de couches de caoutchouc de silicone planes transparentes respectivement en alternance avec des couches de caoutchouc de silicone planes dotées de particules de diffusion (5) les unes sur les autres,
- durcissement desdites liaisons stratifiées ou collées des surfaces,
- découpe d'au moins un conducteur optique (3) d'une épaisseur souhaitée dans le corps stratifié ou collé ainsi obtenu, le sens de découpe étant approximativement perpendiculaire à la surface desdites couches de caoutchouc de silicone.

19. Procédé selon la revendication 19, dans lequel une ou les deux grandes surfaces du conducteur optique (3) sont protégées, en appliquant une couche de finition ou plusieurs couches de finition sur la grande surface respective.
